# EUROPEAN PATENT SPECIFICATION

(11) **EP 3 693 196 B1**
(45) Date of publication and mention of the grant of the patent: **07.07.2021**
(21) Application number: 20153588.7
(22) Date of filing: 24.01.2020
(51) Int. Cl.: B60H 1/00

(54) **VEHICLE-USE AIR CONDITIONING DEVICE**
VORRICHTUNG ZUR KLIMATISIERUNG EINES FAHRZEUGS
SYSTÈME CLIMATISEUR À UTILISER DANS UN VÉHICULE

(30) Priority: 05.02.2019 JP 2019018989
(43) Date of publication of application: 12.08.2020
(73) Proprietor: Valeo Japan Co., Ltd., Kumagaya-Shi SAITAMA 360-0193 (JP)
(72) Inventor: NAGANO, Hideki, SAITAMA, 360-0193 (JP); YOSHIZAKI, Hisayoshi, SAITAMA, 360-0193 (JP); HAYASHI, Naoto, SAITAMA, 360-0193 (JP)
(74) Representative: Tran, Chi-Hai

(56) References cited:
- JP-A- 2015 110 404
- US-A1- 2008 035 745
- US-A1- 2017 305 230
- US-A1- 2018 162 192

## Description

### BACKGROUND OF THE INVENTION

### 1. Field of the Invention

The present invention relates to a vehicle-use air conditioning device.

### 2. Description of the Related Art

A vehicle-use air conditioning device including an air conditioning case and a temperature regulating door, disposed in the air conditioning case, that changes a flow of air that flows through the inside of the air conditioning case is already known. The temperature regulating door regulates proportions of air heated by passing through a heating heat exchanger and air that circumvents the heating heat exchanger, thereby adjusting the temperature of air blown out from the vehicle-use air conditioning device.

Each of Patent Literature 1, US 2017/0305230 A1 and US 2018/0162192 A1 discloses a vehicle-use air conditioning device that has this kind of door. In Patent Literature 1, the vehicle-use air conditioning device has two temperature regulating doors disposed vertically aligned, and two shafts, each of which is coupled to a corresponding temperature regulating door, and the temperature regulating doors can be caused to move vertically in accompaniment to a rotation of the shafts.

The two shafts rotate in accordance with an actuator that drives one shaft so as to rotate and a rack that transmits rotary drive force of the actuator to the other shaft. More specifically, a gear is connected to an end portion of each shaft, and the rack meshes with the gears. Further, by one gear rotating in accordance with the actuator and the rack moving vertically, the other gear rotates. Because of this, the two shafts coupled one to each gear both rotate, and the two doors coupled one to each shaft both move.

Note that an air conditioning case and a rack of a vehicle-use air conditioning device are generally fabricated of a resin material. The air conditioning case and the rack are preferably fabricated using mutually different resin materials in order to prevent, for example, a rubbing noise between the air conditioning case and the rack.

However, when the rack and the air conditioning case are fabricated of mutually different materials, the rack and the air conditioning case generally expand or contract at mutually different rates of expansion/contraction when an ambient temperature changes. When the rack and the air conditioning case expand or contract at different rates of expansion/contraction, a gear meshing position on the rack changes, the gears rotate unintendedly, and the temperature regulating doors move. This kind of vehicle-use air conditioning device is such that when the ambient temperature is higher or lower than usual, the temperature regulating doors cannot be disposed in desired positions in the air conditioning case, and it may be that the temperature of air blown out from the air conditioning device can no longer be adjusted as desired.

Meanwhile, a temperature range within which a vehicle-use air conditioning device is used is generally wide at, for example, -30°C to 80°C. That is, a vehicle-use air conditioning device is required to operate normally within this kind of wide temperature range.

For the above reasons, there is a demand for a realization of a vehicle-use air conditioning device that is a vehicle-use air conditioning device such that an air conditioning case and a rack expand or contract at mutually different rates of expansion/contraction when there is a temperature change, wherein concern of an operational failure occurring in accompaniment to an expansion or a contraction of the air conditioning case and the rack is reduced.

Patent Literature 1: JP-A-2015-110404

### SUMMARY OF THE INVENTION

An object of the invention is to provide a vehicle-use air conditioning device that is a vehicle-use air conditioning device such that an air conditioning case and a rack expand or contract at mutually different rates of expansion/contraction when there is a temperature change, wherein concern of an operational failure occurring due to an expansion or a contraction of the air conditioning case and the rack is reduced.

In accordance with the present invention there is provided a vehicle-use air conditioning device as set out in independent claim 1. Preferred embodiments of the present invention are laid down in the appended dependent claims.

According to the invention, a vehicle-use air conditioning device that is a vehicle-use air conditioning device such that rates of expansion/contraction of an air conditioning case and a rack due to temperature change are different, wherein concern of an operational failure occurring due to an expansion or a contraction of the air conditioning case and the rack is reduced, can be provided.

### BRIEF DESCRIPTION OF THE DRAWINGS

Fig. 1 is a side view schematically showing a configuration of an air conditioning unit of a vehicle-use air conditioning device according to a first embodiment of the invention.
Fig. 2 is a sectional view in a vertical direction of the air conditioning unit shown in Fig. 1.
Fig. 3 is a sectional view along a III-III line of the air conditioning unit shown in Fig. 1.
Fig. 4 is a sectional view along a IV-IV line of the air conditioning unit shown in Fig. 1.
Fig. 5 is an exploded perspective view showing temperature regulating doors, shafts, external gears, a rotary drive unit, and a rack shown in Fig. 1.
Fig. 6 is a drawing for describing rotation of the external gears in the vehicle-use air conditioning device shown in Fig. 1 when an air conditioning case and the rack expand at different rates of expansion/contraction.
Fig. 7 is a drawing for describing movement of the temperature regulating doors in the case shown in Fig. 6.
Fig. 8 is a drawing for describing rotation of the external gears in the vehicle-use air conditioning device shown in Fig. 1 when the air conditioning case and the rack contract at different rates of expansion/contraction.
Fig. 9 is a drawing for describing movement of the temperature regulating doors in the case shown in Fig. 8.
Fig. 10 is a drawing for describing a modified example of the rack.
Fig. 11 is a drawing for describing another modified example of the rack.
Fig. 12 is a side view schematically showing a configuration of an air conditioning unit of a vehicle-use air conditioning device according to a second embodiment of the invention.
Fig. 13 is a drawing for describing rotation of the external gears in the vehicle-use air conditioning device shown in Fig. 12 when the air conditioning case and the rack expand at different rates of expansion/contraction.
Fig. 14 is a drawing for describing movement of the temperature regulating doors in the case shown in Fig. 13.
Fig. 15 is a drawing for describing rotation of the external gears in the vehicle-use air conditioning device shown in Fig. 12 when the air conditioning case and the rack contract at different rates of expansion/contraction.
Fig. 16 is a drawing for describing movement of the temperature regulating doors in the case shown in Fig. 15.
Fig. 17 is a drawing for describing rotation of the external gears in a vehicle-use air conditioning device in a comparative example when the air conditioning case and the rack expand at different rates of expansion/contraction.
Fig. 18 is a drawing for describing movement of the temperature regulating doors in the case shown in Fig. 17.
Fig. 19 is a drawing for describing rotation of the external gears in the vehicle-use air conditioning device shown in Fig. 17 when the air conditioning case and the rack contract at different rates of expansion/contraction.
Fig. 20 is a drawing for describing movement of the temperature regulating doors in the case shown in Fig. 19.
Fig. 21 is a drawing for describing rotation of the external gears in a vehicle-use air conditioning device in another comparative example when the air conditioning case and the rack expand at different rates of expansion/contraction.
Fig. 22 is a drawing for describing movement of the temperature regulating doors in the case shown in Fig. 21.
Fig. 23 is a drawing for describing rotation of the external gears in the vehicle-use air conditioning device shown in Fig. 21 when the air conditioning case and the rack contract at different rates of expansion/contraction.
Fig. 24 is a drawing for describing movement of the temperature regulating doors in the case shown in Fig. 23.

### DESCRIPTION OF THE PREFERRED EMBODIMENTS

Hereafter, referring to the attached drawings, an embodiment of the invention will be described.

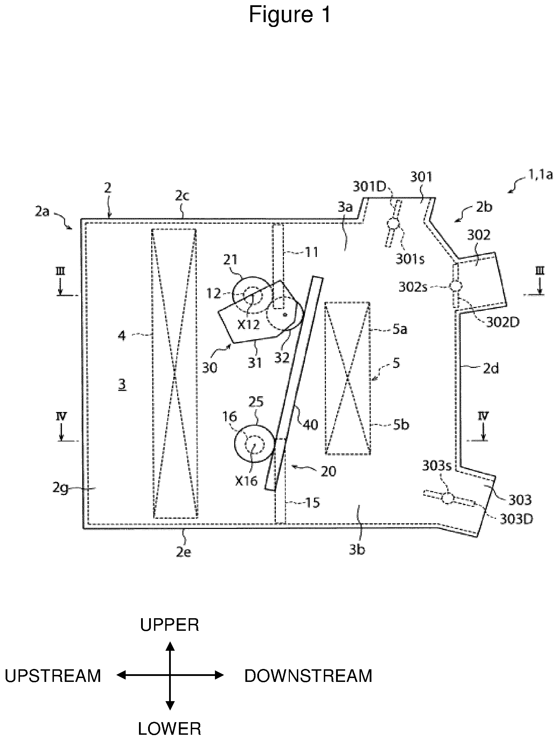

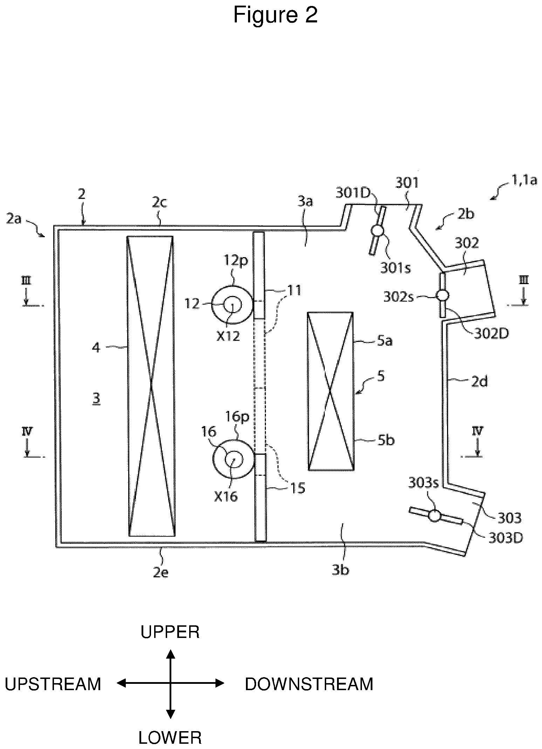

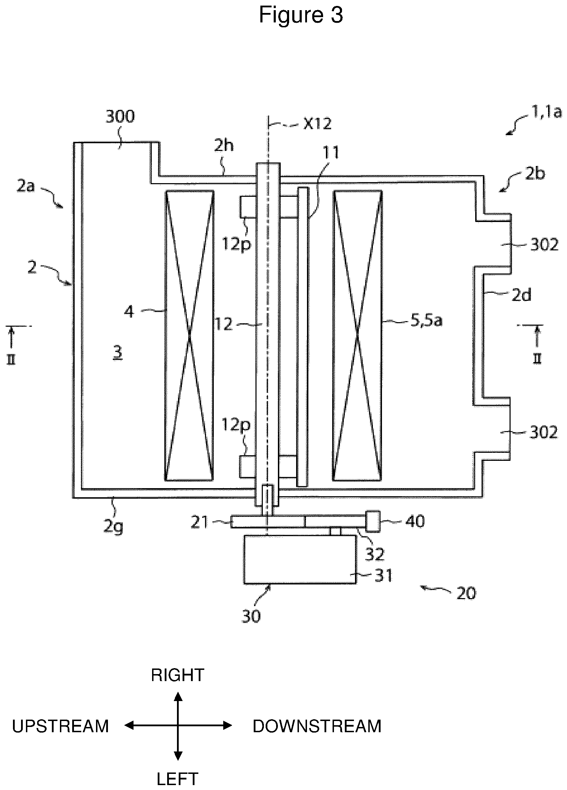

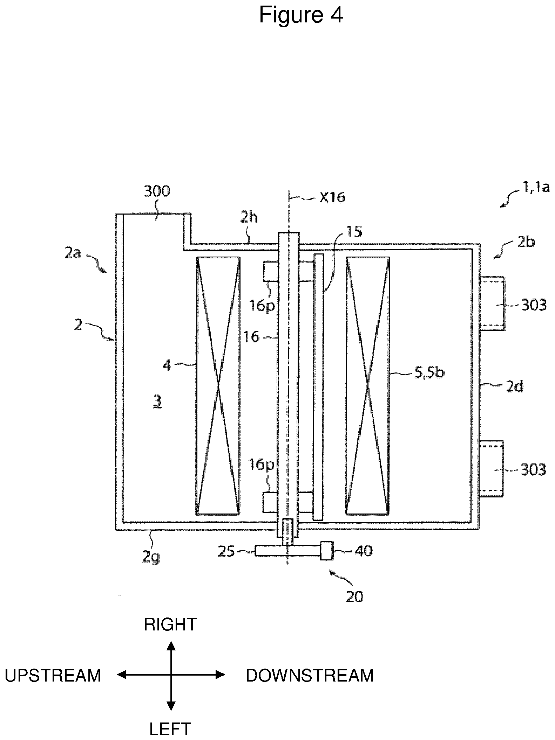

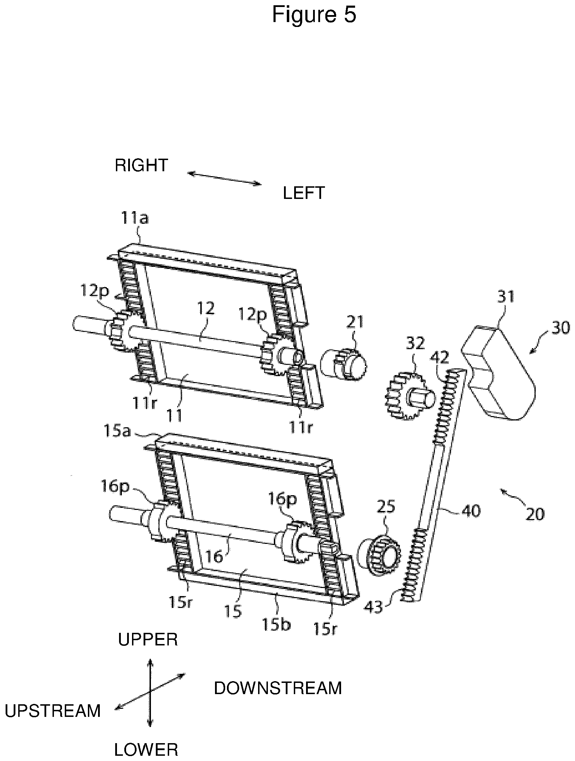

Fig. 1 is a side view schematically showing a configuration of an air conditioning unit of a vehicle-use air conditioning device according to a first embodiment of the invention. Also, Fig. 2 is a sectional view in a vertical direction of the air conditioning unit shown in Fig. 1. Specifically, Fig. 2 shows a cross-section along a II-II line of Fig. 3. Also, Fig. 3 and Fig. 4 are sectional views along a III-III line and a IV-IV line respectively of the air conditioning unit shown in Fig. 1. A depiction of a blowout passage door, to be described hereafter, is omitted from Fig. 3 and Fig. 4. Also, Fig. 5 is an exploded perspective view showing temperature regulating doors, shafts, external gears, a rotary drive unit, and a rack shown in Fig. 1.

As shown in Fig. 1 to Fig. 4, an air conditioning unit 1a of a vehicle-use air conditioning device 1 (hereafter, also called simply "the air conditioning device") has an air conditioning case 2. An internal space 3 through which air flows is formed in an interior of the air conditioning case 2. Hereafter, terminological items "upstream side" and "downstream side" with respect to the air conditioning device 1 and components thereof respectively indicate an "upstream side" and a "downstream side" having a direction of flow of air flowing through the internal space 3 of the air conditioning case 2 as a reference.

As shown in Fig. 3 and Fig. 4, a connection port 300 to be connected to a blower (not shown) is formed in an upstream side end portion 2a of the air conditioning case 2, and air blown out from the blower flows into the internal space 3 of the air conditioning case 2 through the connection port 300. Also, a multiple of blowout passages 301, 302, and 303 are formed in a downstream side end portion 2b of the air conditioning case 2, and air that has flowed into the internal space 3 flows out from the blowout passages 301, 302, and 303.

The multiple of blowout passages of the air conditioning case 2 include a defrost blowout passage 301, a vent blowout passage 302, and a foot blowout passage 303. As shown in Fig. 1 and Fig. 2, the defrost blowout passage 301 is provided in a top face 2c of the air conditioning case 2. A downstream end of the defrost blowout passage 301 is connected to an unshown defrost blowout port that blows air out toward an inner face of a windshield in a vehicle interior. Also, the vent blowout passage 302 is provided in an upper side portion of a downstream side end face 2d of the air conditioning case 2. A downstream end of the vent blowout passage 302 is connected to an unshown vent blowout port that blows air out toward an upper body of passengers sitting in a driver's seat and a passenger seat (in a rear seat too in certain cases). Also, the foot blowout passage 303 is provided in a lower side portion of the downstream side end face 2d of the air conditioning case 2. A downstream end of the foot blowout passage 303 is connected to an unshown foot blowout port that blows air out toward feet of passengers sitting in the driver's seat and the passenger seat (in the rear seat too in certain cases).

As shown in Fig. 1 to Fig. 4, a cooling heat exchanger (evaporator) 4, a heating heat exchanger (heater core) 5, and various kinds of door (temperature regulating doors 11 and 15 and blowout passage doors 301D, 302D, and 303D) that change a flow of air flowing through the internal space 3, are provided in the internal space 3 of the air conditioning case 2. Also, a drive mechanism 20 that drives the temperature regulating doors 11 and 15 is provided on a side face 2g on a left side of the air conditioning case 2 as seen from the driver's seat.

The cooling heat exchanger (evaporator) 4 is provided so that all air that flows into the internal space 3 of the air conditioning case 2 passes through the cooling heat exchanger 4. Specifically, the cooling heat exchanger 4 is provided so as to occupy a whole sectional area of the internal space 3. The cooling heat exchanger 4 takes heat from air that passes through the cooling heat exchanger 4, and when humidity of the air is high, the cooling heat exchanger 4 lowers the humidity of the air by causing moisture in the air to condense.

The heating heat exchanger (heater core) 5 is disposed on a downstream side of the cooling heat exchanger 4 in the internal space 3 of the air conditioning case 2. The heating heat exchanger 5 heats air that passes through the heating heat exchanger 5.

The heating heat exchanger 5 does not occupy the whole sectional area of the internal space 3. A first cool air bypass 3a is formed in the air conditioning case 2 between one end (an upper end in the example shown) of the heating heat exchanger 5 and the top face 2c of the air conditioning case 2. Also, a second cool air bypass 3b is formed between another end (a lower end in the example shown) of the heating heat exchanger 5 opposing the one end side and a bottom face 2e of the air conditioning case. The cool air bypasses 3a and 3b enable air flowing through the internal space 3 to flow to a downstream side of the heating heat exchanger 5 without passing through the heating heat exchanger 5 (circumventing the heating heat exchanger 5).

The temperature regulating doors 11 and 15 are provided between the cooling heat exchanger 4 and the heating heat exchanger 5 in a direction in which the air flows. In the example shown, the temperature regulating doors 11 and 15 are plate-form members, and are disposed approximately parallel to an upstream side face of the heating heat exchanger 5. The temperature regulating doors 11 and 15 are provided in an upper side portion and a lower side portion respectively of the internal space 3, and can regulate apertures of the first cold air bypass 3a and the second cold air bypass 3b. Hereafter, the temperature regulating door 11 disposed in the upper side portion of the internal space 3 is also called "the first temperature regulating door 11", and the temperature regulating door 15 disposed in the lower side portion of the internal space 3 is also called "the second temperature regulating door 15".

In the specification, for ease of description, an alignment direction of the temperature regulating doors 11 and 15, an alignment direction of shafts 12 and 16 to be described hereafter, and an alignment direction of gears 21 and 25 coincide in an up-down direction in Fig. 1 and Fig. 2. However, this does not mean that the alignment direction of the temperature regulating doors 11 and 15, the alignment direction of the shafts 12 and 16, and the alignment direction of the gears 21 and 25 when the air conditioning device 1 is actually installed in a vehicle are limited to coinciding in an up-down direction (vertical direction). Also, directions in which the shafts 12 and 16 and shafts 301s, 302s, and 303s, to be described hereafter, extend coincide in a left-right direction in Fig. 3 and Fig. 4. However, this does not mean that the directions in which the shafts 12, 16, 301s, 302s, and 303s extend when the air conditioning device 1 is actually installed in a vehicle are limited to coinciding in a left-right direction as seen from the driver's seat.

The first temperature regulating door 11 can slide in the up-down direction in the upper side portion of the internal space 3. Further, the first temperature regulating door 11 regulates proportions of air that heads to an upper side portion 5a of the heating heat exchanger 5 and air that heads to the first cold air bypass 3a in accordance with a position of the first temperature regulating door 11. Also, the second temperature regulating door 15 can slide in the up-down direction in the lower side portion of the internal space 3. The second temperature regulating door 15 regulates proportions of air that heads to a lower side portion 5b of the heating heat exchanger 5 and air that heads to the second cold air bypass 3b in accordance with a position of the second temperature regulating door 15.

As shown in Fig. 3 and Fig. 4, the first temperature regulating door 11 and the second temperature regulating door 15 are coupled respectively to the shafts 12 and 16, which extend in the left-right direction in the internal space 3, and slide in the up-down direction in the upper side portion and the lower side portion of the internal space 3 in accompaniment to rotation of the shafts 12 and 16. More specifically, as shown in Fig. 5, racks 11r and 15r are provided on one face (a face facing the cooling heat exchanger 4) of the temperature regulating doors 11 and 15 respectively, from an upper end portion of the face to a lower end portion. Also, gears 12p and 16p that mesh with the racks 11r and 15r are provided on an outer peripheral face of the shafts 12 and 16 respectively. Further, when the shafts 12 and 16 are caused to rotate in a circumferential direction, rotary motion of the shafts 12 and 16 is converted into motion in the up-down direction by the gears 12p and 16p and the racks 11r and 15r, and the temperature regulating doors 11 and 15 slide up and down.

Hereafter, the shaft 12 coupled to the first temperature regulating door 11 is also called "the first shaft 12", and the shaft 16 coupled to the second temperature regulating door 15 is also called "the second shaft 16".

As shown in Fig. 3 and Fig. 4, the shafts 12 and 16 are supported so as to be able to rotate at either end portion thereof by left and right side faces 2g and 2h of the air conditioning case 2. In the example shown, left side end portions of the shafts 12 and 16 extend to an outer side of the air conditioning case 2, and are connected to the drive mechanism 20.

By sliding in the up-down direction in the upper side portion of the internal space 3 as heretofore described, the first temperature regulating door 11 regulates the proportions of air that heads to the upper side portion 5a of the heating heat exchanger 5 and air that heads to the first cold air bypass 3a. That is, an aperture area of the first cold air bypass 3a is changed, and an area of a portion of the upper side portion 5a of the heating heat exchanger 5 that coincides with the first temperature regulating door 11 when looking in the direction in which the air flows is changed, by the first temperature regulating door 11 sliding in the up-down direction. Because of this, the proportions of air that heads to the first cold air bypass 3a and air that heads to the upper side portion 5a of the heating heat exchanger 5 in the upper side portion of the internal space 3 are changed. Specifically, when the first temperature regulating door 11 is in the position indicated by a solid line in Fig. 2, the aperture area of the first cold air bypass 3a is reduced to a minimum, and the area of the portion of the upper side portion 5a of the heating heat exchanger 5 that coincides with the first temperature regulating door 11 when looking in the direction in which the air flows is reduced to a minimum. In this case, the ratio of air that heads to the first cold air bypass 3a in the upper side portion of the internal space 3 is at a minimum, while the ratio of air that heads to the heating heat exchanger 5 is at a maximum. Also, when the first temperature regulating door 11 is in the position indicated by a broken line in Fig. 2, the aperture area of the first cold air bypass 3a is increased to a maximum, and the area of the portion of the upper side portion 5a of the heating heat exchanger 5 that coincides with the first temperature regulating door 11 when looking in the direction in which the air flows is increased to a maximum. In this case, the ratio of air that heads to the first cold air bypass 3a in the upper side portion of the internal space 3 is at a maximum, while the ratio of air that heads to the heating heat exchanger 5 is at a minimum.

Hereafter, the position of the first temperature regulating door 11 that reduces the aperture area of the first cold air bypass 3a to the minimum (the position indicated by the solid line in Fig. 2) is called an "upper side first position", and the position that increases the aperture area of the first cold air bypass 3a to the maximum (the position indicated by the broken line in Fig. 2) is called an "upper side second position". A range of movement of the first temperature regulating door 11 is restricted by unshown restricting means to a range between the upper side first position and the upper side second position. A guide rail or the like is suggested as the restricting means.

Also, by sliding in the up-down direction in the lower side portion of the internal space 3 as heretofore described, the second temperature regulating door 15 regulates the proportions of air that heads to the lower side portion 5b of the heating heat exchanger 5 and air that heads to the second cold air bypass 3b. That is, an aperture area of the second cold air bypass 3b is changed, and an area of a portion of the lower side portion 5b of the heating heat exchanger 5 that coincides with the second temperature regulating door 15 when looking in the direction in which the air flows is changed, by the second temperature regulating door 15 sliding in the up-down direction. Because of this, the proportions of air that heads to the second cold air bypass 3b and air that heads to the lower side portion 5b of the heating heat exchanger 5 in the lower side portion of the internal space 3 are changed. Specifically, when the second temperature regulating door 15 is in the position indicated by a solid line in Fig. 2, the aperture area of the second cold air bypass 3b is reduced to a minimum, and the area of the portion of the lower side portion 5b of the heating heat exchanger 5 that coincides with the second temperature regulating door 15 when looking in the direction in which the air flows is reduced to a minimum. In this case, the ratio of air that heads to the second cold air bypass 3b in the lower side portion of the internal space 3 is at a minimum, while the ratio of air that heads to the heating heat exchanger 5 is at a maximum. Also, when the second temperature regulating door 15 is in the position indicated by a broken line in Fig. 2, the aperture area of the second cold air bypass 3b is increased to a maximum, and the area of the portion of the lower side portion 5b of the heating heat exchanger 5 that coincides with the second temperature regulating door 15 when looking in the direction in which the air flows is increased to a maximum. In this case, the ratio of air that heads to the second cold air bypass 3b in the lower side portion of the internal space 3 is at a maximum, while the ratio of air that heads to the heating heat exchanger 5 is at a minimum.

Hereafter, the position of the second temperature regulating door 15 that reduces the aperture area of the second cold air bypass 3b to the minimum (the position indicated by the solid line in Fig. 2) is called a "lower side first position", and the position that increases the aperture area of the second cold air bypass 3b to the maximum (the position indicated by the broken line in Fig. 2) is called a "lower side second position".

In the example shown, the drive mechanism 20 is configured so as to dispose the second temperature regulating door 15 in the lower side first position (the position indicated by the solid line in Fig. 2) when the first temperature regulating door 11 is disposed in the upper side first position (the position indicated by the solid line in Fig. 2), and dispose the second temperature regulating door 15 in the lower side second position (the position indicated by the broken line in Fig. 2) when the first temperature regulating door 11 is disposed in the upper side second position (the position indicated by the broken line in Fig. 2). The positions of the first temperature regulating door 11 and the second temperature regulating door 15 are controlled based on a temperature regulating mode of the air conditioning device 1 set by a passenger or the like. Because of this, air of a temperature in accordance with the set temperature regulating mode is blown out from the air conditioning device 1 into the vehicle interior.

As can be understood from the description above, the positions of the temperature regulating doors 11 and 15 correspond to rotational phases of the shafts 12 and 16 respectively. Consequently, the positions of the temperature regulating doors 11 and 15 are controlled by controlling the rotational phases of the shafts 12 and 16.

Hereafter, a temperature regulating mode such that all air flowing through the internal space 3 of the air conditioning case 2 passes through the heating heat exchanger 5 is called a "full hot mode" . In this kind of temperature regulating mode, air blown out from the air conditioning device 1 is at a maximum temperature. Consequently, the full hot mode is executed when an ambient temperature of the air conditioning device 1 is low. Also, a temperature regulating mode such that all air flowing through the internal space 3 of the air conditioning case 2 circumvents the heating heat exchanger 5 is called a "full cool mode". In this kind of temperature regulating mode, air blown out from the air conditioning device 1 is at a minimum temperature. Consequently, the full cool mode is executed when the ambient temperature of the air conditioning device 1 is high.

In the example shown, the temperature regulating mode of the air conditioning device 1 is the full hot mode when the first temperature regulating door 11 is disposed in the upper side first position and the second temperature regulating door 15 is disposed in the lower side first position. Also, the temperature regulating mode of the air conditioning device 1 is the full cool mode when the first temperature regulating door 11 is disposed in the upper side second position and the second temperature regulating door 15 is disposed in the lower side second position.

Specifically, a cushioning member 11a having elasticity is provided in an upper end portion of the first temperature regulating door 11, as shown in Fig. 5. Also, cushioning members 15a and 15b having elasticity are provided in an upper end portion and a lower end portion respectively of the second temperature regulating door 15 too. When the air conditioning device 1 is used in a normal ambient temperature (for example, 20°C), the upper end portion of the first temperature regulating door 11 disposed in the upper side first position comes into close contact with the top face 2c of the air conditioning case 2 across the cushioning member 11a, and the lower end portion of the second temperature regulating door 15 disposed in the lower side first position comes into close contact with the bottom face 2e of the air conditioning case 2 across the cushioning member 15b. This means that when the first temperature regulating door 11 and the second temperature regulating door 15 are disposed in the upper side first position and the lower side first position respectively, the full hot mode, wherein all the air flowing through the internal space 3 of the air conditioning case 2 heads toward the heating heat exchanger 5, is in effect at the normal ambient temperature (for example, 20°C) . When the air conditioning device 1 is used in the normal ambient temperature (for example, 20°C), the upper end portion of the second temperature regulating door 15 disposed in the lower side second position comes into close contact with the lower end portion of the first temperature regulating door 11 disposed at the upper side second position across the cushioning member 15a. This means that when the first temperature regulating door 11 and the second temperature regulating door 15 are disposed in the upper side second position and the lower side second position respectively, the full cool mode, wherein all the air flowing through the internal space 3 of the air conditioning case 2 circumvents the heating heat exchanger 5, is in effect at the normal ambient temperature (for example, 20°C). Although not shown, a form such that a cushioning member is provided in a lower end portion of the first temperature regulating door 11 while no cushioning member is provided in the upper end portion of the second temperature regulating door 15, or a form such that a cushioning member is provided in each of the lower end portion of the first temperature regulating door 11 and the upper end portion of the second temperature regulating door 15, may be adopted.

The blowout passage doors 301D, 302D, and 303D are provided in the defrost blowout passage 301, the vent blowout passage 302, and the foot blowout passage 303 respectively, and regulate aperture areas of the corresponding blowout passages 301, 302, and 303. Hereafter, the blowout passage doors 301D, 302D, and 303D are also called "the defrost door 301D", "the vent door 302D", and "the foot door 303D" respectively, meaning doors that open and close the blowout passages 301, 302, and 303, which are continuous with a defrost blowout port, a vent blowout port, and a foot blowout port.

The blowout passage doors 301D, 302D, and 303D are plate-form members that extend from the shafts 301s, 302s, and 303s, which extend in the left-right direction in the air conditioning case 2. The blowout passage doors 301D, 302D, and 303D open or close the corresponding blowout passages 301, 302, and 303 in response to the shafts 301s, 302s, and 303s being rotated by an unshown drive mechanism. Apertures of the doors 301D, 302D, and 303D are controlled by a control unit formed of a vehicle-mounted microcomputer or the like, whereby the aperture areas of the blowout passages 301, 302, and 303 can be regulated to arbitrary aperture areas.

Blowout modes of the air conditioning device 1 shown in Fig. 1 to Fig. 4 include, for example, a defrost mode, a defrost/foot mode, a foot mode, a vent mode, and a bilevel mode. In the defrost mode, the defrost door 301D is opened, the vent door 302D and the foot door 303D are closed, and conditioned air is blown out from the defrost blowout port. In the defrost/foot mode, the defrost door 301D and the foot door 303D are opened, the vent door 302D is closed, and conditioned air is blown out from the defrost blowout port and the foot blowout port. In the foot mode, the defrost door 301D and the vent door 302D are closed, the foot door 303D is opened, and conditioned air is blown out from the foot blowout port. In the vent mode, the vent door 302D is opened, the defrost door 301D and the foot door 303D are closed, and conditioned air is blown out from the vent blowout port. In the bilevel mode, the vent door 302D and the foot door 303D are opened, the defrost door 301D is closed, and conditioned air is blown out from the vent blowout port and the foot blowout port.

Next, the drive mechanism 20, which drives the first shaft 12 and the second shaft 16 so as to rotate, will be described.

As shown in Fig. 1, Fig. 3, and Fig. 4, the drive mechanism 20 is attached opposing the left side face 2g of the air conditioning case 2 on the outer side of the air conditioning case 2. As shown in Fig. 1, the drive mechanism 20 has the first external gear 21 coupled to the first shaft 12, the second external gear 25 coupled to the second shaft 16, a rotary drive unit 30, and a rack 40.

The first external gear 21 is fixed to a side end portion (a left-side end portion) of the first shaft 12, as shown in Fig. 3, and rotates around an axis of rotation X12 of the first shaft 12. Also, the second external gear 25 is fixed to a side end portion (a left-side end portion) of the second shaft 16, as shown in Fig. 4, and rotates around an axis of rotation X16 of the second shaft 16.

The rotary drive unit 30 outputs a rotary drive force that drives the first external gear 21 so as to rotate. In the example shown, the rotary drive unit 30 includes an actuator 31, and a driving gear 32 driven so as to rotate by the actuator 31. As shown in Fig. 1 and Fig. 3, the driving gear 32 meshes with the first external gear 21. This means that when the actuator 31 drives the driving gear 32 so as to rotate clockwise or counterclockwise, the first external gear 21 rotates around the axis of rotation X12 in a direction of rotation opposite to that of the driving gear 32 (counterclockwise or clockwise) .

The rack 40 is of a long and thin form overall, and has toothed portions 42 and 43, in which teeth that mesh with the driving gear 32 and the second external gear 25 are formed, in either end portion. The rotary drive force of the rotary drive unit 30 is transmitted to the second external gear 25 by the rack 40 meshing with the driving gear 32 and the second external gear 25. Further, when the actuator 31 drives the driving gear 32 so as to rotate clockwise or counterclockwise, the second external gear 25 rotates around the axis of rotation X16 in the same direction of rotation as that of the driving gear 32 (clockwise or counterclockwise). That is, the first external gear 21 and the second external gear 25 rotate in mutually different directions of rotation. Because of this, the drive mechanism 20 can cause the second temperature regulating door 15 to move in a direction from the lower side first position indicated by the solid line in Fig. 2 toward the lower side second position indicated by the broken line simultaneously with causing the first temperature regulating door 11 to move in a direction from the upper side first position indicated by the solid line in Fig. 2 toward the upper side second position indicated by the broken line. Also, the drive mechanism 20 can cause the second temperature regulating door 15 to move in a direction from the lower side second position toward the lower side first position simultaneously with causing the first temperature regulating door 11 to move in a direction from the upper side second position toward the upper side first position. An operating amount of the actuator 31 (that is, a rotational phase of the driving gear 32) is controlled by an unshown control unit formed of a vehicle-mounted microcomputer or the like.

In order to maintain a state of meshing between the toothed portions 42 and 43 and the external gears 21 and 25, the rack 40 is supported by a supporting protrusion (not shown) that protrudes from the left side face 2g of the air conditioning case 2, and biased toward the external gears 21 and 25.

Also, in the example shown, the air conditioning case 2 and the rack 40 are formed using a resin material. Also, the air conditioning case 2 and the rack 40 are formed using mutually different resin materials in order to prevent an abnormal sound, such as a rubbing sound between the air conditioning case 2 and the rack 40, when the drive mechanism 20 operates.

Note that a temperature range within which a vehicle-use air conditioning device is used is generally extremely wide at, for example, -30°C to 80°C. That is, a vehicle-use air conditioning device is required to be able to operate in a desired temperature regulating mode or blowout mode even when the ambient temperature of the vehicle-use air conditioning device rises from a normal ambient temperature (for example, 20°C) to 80°C, or decreases from the normal ambient temperature to -30°C.

However, when an air conditioning case and a rack are fabricated of mutually different materials as heretofore described, the air conditioning case and the rack generally expand or contract at mutually different rates of expansion/contraction (or thermal expansion coefficients) when the ambient temperature changes.

Herein, when the rates of expansion/contraction (or thermal expansion coefficients) of the rack and the air conditioning case when the temperature changes are mutually different, it may happen that the air conditioning device can no longer be operated in the desired temperature regulating mode. Specifically, it may happen that the air conditioning device can no longer be operated in the full cool mode or the full hot mode. For example, when an air conditioning device in which the drive mechanism 20 shown in Fig. 1 is used is such that the rate of expansion/contraction of the rack 40 is greater than the rate of expansion/contraction of the air conditioning case 2, it may happen that the air conditioning device can no longer be operated in the full cool mode or the full hot mode.

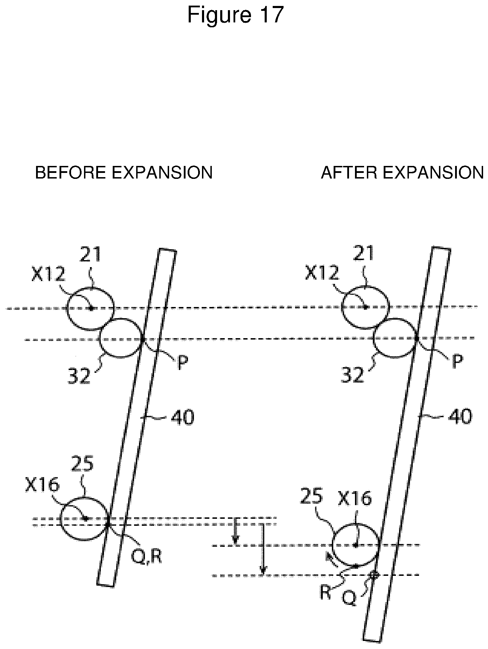

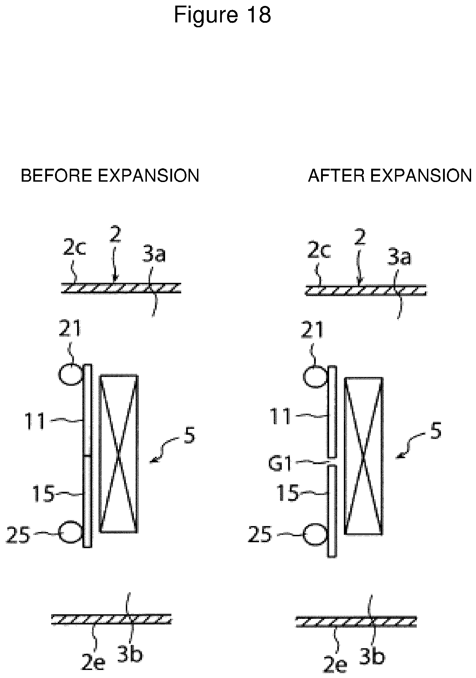

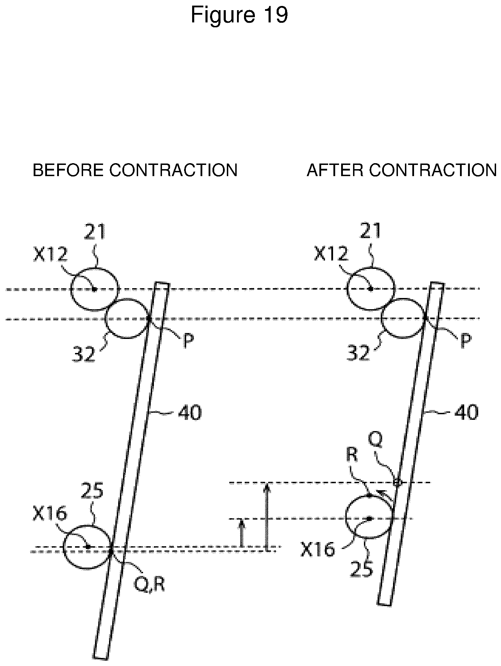

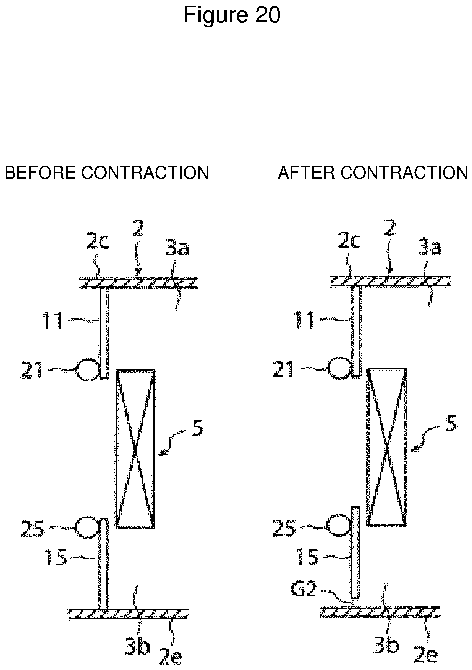

Hereafter, reasons for this kind of problem occurring in an air conditioning device will be described, referring to a comparative example shown in Fig. 17 to Fig. 20. Fig. 17 is a drawing schematically showing the rack 40, the external gears 21 and 25, and the driving gear 32 of the rotary drive unit 30, before and after expansion of the rack 40 and the air conditioning case 2. In Fig. 17, a point P, a point Q, and a point R indicate respectively a position in which the rack 40 meshes with the driving gear 32, a position in which the rack 40 meshes with the second external gear 25, and a position in which the second external gear 25 meshes with the rack 40, before expansion of the rack 40 and the air conditioning case 2. Also, Fig. 18 is a drawing schematically showing the temperature regulating doors 11 and 15, the heating heat exchanger 5, and one portion of the air conditioning case 2, before and after expansion of the rack 40 and the air conditioning case 2. Furthermore, Fig. 19 is a drawing schematically showing the rack 40, the external gears 21 and 25, and the driving gear 32 of the rotary drive unit 30, before and after contraction of the rack 40 and the air conditioning case 2. In Fig. 19, the point P, the point Q, and the point R indicate respectively a position in which the rack 40 meshes with the driving gear 32, a position in which the rack 40 meshes with the second external gear 25, and a position in which the second external gear 25 meshes with the rack 40, before contraction of the rack 40 and the air conditioning case 2. Also, Fig. 20 is a drawing schematically showing the temperature regulating doors 11 and 15, the heating heat exchanger 5, and one portion of the air conditioning case 2, before and after contraction of the rack 40 and the air conditioning case 2.

Firstly, referring to Fig. 17 and Fig. 18, a case wherein the rack 40 and the air conditioning case 2 expand will be described. Herein, the rotary drive unit 30 does not operate, and rotation of the driving gear 32 is locked (stopped).

When the ambient temperature of the air conditioning device rises, the air conditioning case 2 expands, and an interval between the driving gear 32 supported by the air conditioning case 2 and the second external gear 25 widens, as shown in Fig. 17. Also, the rack 40 expands, and lengthens in a longitudinal direction thereof. Herein, in the comparative example shown, the rate of expansion/contraction (thermal expansion coefficient) of the rack 40 due to temperature change is greater than the rate of expansion/contraction (thermal expansion coefficient) of the air conditioning case 2 due to temperature change. Because of this, an amount by which an interval between the points P and Q of the rack 40 widens is greater than an amount by which an interval between the gears 32 and 25 widens. Herein, the rotation of the driving gear 32 is locked, as heretofore described. Because of this, the rack 40 remains meshed with the driving gear 32 at the point P even when the rack 40 expands . Meanwhile, a portion of the rack 40 farther to a lower side (the second external gear 25 side) than the point P lengthens downward. For the above reasons, only the second external gear 25, of the external gears 21 and 25, rotates when the rack 40 and the air conditioning case 2 expand.

In the comparative example shown, the rack 40 meshes with a downstream side portion of the second external gear 25. This means that when the rack 40 and the air conditioning case 2 expand, the second external gear 25 rotates in the clockwise direction in Fig. 17. An amount by which the second external gear 25 rotates is an amount in accordance with a difference between an amount by which an interval between the external gears 21 and 25 widens and an amount by which the interval between the points P and Q of the rack 40 widens.

When the second external gear 25 rotates in the clockwise direction, the second temperature regulating door 15 coupled to the second shaft 16 coupled to the second external gear 25 moves downward. As the first temperature regulating door 11 does not move at this time, an interval between the first temperature regulating door 11 and the second temperature regulating door 15 widens. As a result of this, the ratio of air that passes through the heating heat exchanger 5 in the internal space 3 of the air conditioning case 2 increases, even though the rotary drive unit 30 is not operating.

This kind of air conditioning device is such that even when disposing the first temperature regulating door 11 in the upper side second position in order to cause the air conditioning device to operate in the full cool mode, the second temperature regulating door 15 is disposed in different positions with respect to the first temperature regulating door 11 before and after expansion of the rack 40 and the air conditioning case 2, as shown in Fig. 18. That is, even though the second temperature regulating door 15 is disposed so as to be in contact with the first temperature regulating door 11 before expansion, the second temperature regulating door 15 is disposed in a position separated from the first temperature regulating door 11 after expansion. Consequently, even though the first temperature regulating door 11 is disposed in the upper side second position after expansion, a gap G1 is formed between the temperature regulating doors 11 and 15, and one portion of air flowing through the internal space 3 of the air conditioning case 2 heads toward the heating heat exchanger 5 through the gap G1. As the range of movement of the first temperature regulating door 11 is restricted to the range between the upper side first position and the upper side second position, as heretofore described, the first temperature regulating door 11 and the second temperature regulating door 15 cannot be brought into greater proximity to each other, and brought into contact, by causing the rotary drive unit 30 to operate. Consequently, the temperature regulating mode of the air conditioning device according to this comparative example cannot be the full cool mode.

Next, referring to Fig. 19 and Fig. 20, a description will be given of a case wherein the rack 40 and the air conditioning case 2 of the air conditioning device according to the comparative example contract. Herein too, the rotary drive unit 30 does not operate, and rotation of the driving gear 32 is locked.

When the ambient temperature of the air conditioning device decreases, the air conditioning case 2 contracts, and the interval between the driving gear 32 supported by the air conditioning case 2 and the second external gear 25 narrows, as shown in Fig. 19. Also, the rack 40 contracts, and shrinks in the longitudinal direction thereof. In the comparative example shown, as heretofore described, the rate of expansion/contraction (thermal expansion coefficient) of the rack 40 due to temperature change is greater than the rate of expansion/contraction (thermal expansion coefficient) of the air conditioning case 2 due to temperature change, because of which an amount by which the interval between the points P and Q of the rack 40 narrows is greater than an amount by which the interval between the gears 32 and 25 narrows. Herein, the rotation of the driving gear 32 is stopped, as heretofore described. Because of this, the rack 40 remains meshed with the driving gear 32 at the point P even when the rack 40 contracts. Meanwhile, a portion of the rack 40 farther to the lower side (the second external gear 25 side) than the point P contracts upward. For the above reasons, only the second external gear 25, of the external gears 21 and 25, rotates when the rack 40 and the air conditioning case 2 contract.

In the comparative example shown, the rack 40 meshes with a downstream side portion of the second external gear 25. This means that when the rack 40 and the air conditioning case 2 contract, the second external gear 25 rotates in the counterclockwise direction in Fig. 19. An amount by which the second external gear 25 rotates is an amount in accordance with a difference between an amount by which the interval between the external gears 21 and 25 narrows and an amount by which the interval between the points P and Q of the rack 40 narrows.

When the second external gear 25 rotates in the counterclockwise direction, the second temperature regulating door 15 coupled to the second shaft 16 coupled to the second external gear 25 moves upward. As the first temperature regulating door 11 does not move at this time, the interval between the first temperature regulating door 11 and the second temperature regulating door 15 narrows. As a result of this, the ratio of air that passes through the heating heat exchanger 5 in the internal space 3 of the air conditioning case 2 decreases, even though the rotary drive unit 30 is not operating.

This kind of air conditioning device is such that even when disposing the first temperature regulating door 11 in the upper side first position in order to cause the air conditioning device to operate in the full hot mode, the second temperature regulating door 15 is disposed in different positions with respect to the bottom face 2e of the air conditioning case 2 before and after contraction of the rack 40 and the air conditioning case 2, as shown in Fig. 20. That is, even though the second temperature regulating door 15 is disposed so as to be in contact with the bottom face 2e of the air conditioning case 2 before contraction, the second temperature regulating door 15 is disposed in a position separated from the bottom face 2e after contraction. Consequently, even though the first temperature regulating door 11 is disposed in the upper side first position after contraction, a gap G2 is formed between the second temperature regulating door 15 and the bottom face 2e of the air conditioning case 2, and one portion of air flowing through the internal space 3 of the air conditioning case 2 circumvents the heating heat exchanger 5 through the gap G2. As the range of movement of the first temperature regulating door 11 is restricted to the range between the upper side first position and the upper side second position, as heretofore described, the first temperature regulating door 11 and the second temperature regulating door 15 cannot be separated farther from each other, and the second temperature regulating door 15 cannot be brought into contact with the bottom face 2e of the air conditioning case 2, by causing the rotary drive unit 30 to operate. Consequently, the temperature regulating mode of the air conditioning device according to this comparative example cannot be the full hot mode.

For the above reasons, there is a demand for a realization of an air conditioning device that can operate in a full cool mode even when the ambient temperature rises and an air conditioning case and a rack expand. Also, there is a demand for a realization of an air conditioning device that can operate in a full hot mode even when the ambient temperature decreases and an air conditioning case and a rack contract.

With consideration to this kind of point, the air conditioning device 1 according to the embodiment is configured as follows. That is, a magnitude relationship between the rates of expansion/contraction (thermal expansion coefficients) of the rack 40 and the air conditioning case 2 due to temperature change is determined in accordance with the configuration of the drive mechanism 20. Alternatively, the drive mechanism 20 is configured in accordance with the magnitude relationship between the rates of expansion/contraction.

More specifically, the magnitude relationship between the rates of expansion/contraction and the structure of the drive mechanism 20 are determined in such a way that the drive mechanism 20 causes the second shaft 16 to rotate so that the second temperature regulating door 15 moves in a direction toward the first temperature regulating door 11 when the air conditioning case 2 and the rack 40 expand. Alternatively, the magnitude relationship between the rates of expansion/contraction and the structure of the drive mechanism 20 are determined in such a way that the drive mechanism 20 causes the second shaft 16 to rotate so that the second temperature regulating door 15 moves in a direction away from the first temperature regulating door 11 when the air conditioning case 2 and the rack 40 contract.

Because of this, the air conditioning device 1 can be operated in the full cool mode even when the ambient temperature of the air conditioning device 1 rises, and the air conditioning case 2 and the rack 40 expand at mutually different rates of expansion/contraction (thermal expansion coefficients). In other words, a gap is prevented from being formed between the temperature regulating doors 11 and 15 when the first temperature regulating door 11 is disposed in the upper side second position. Also, the air conditioning device 1 can be operated in the full hot mode even when the ambient temperature of the air conditioning device 1 decreases, and the air conditioning case 2 and the rack 40 contract at mutually different rates of expansion/contraction (thermal expansion coefficients) . In other words, a gap is prevented from being formed between the second temperature regulating door 15 and the bottom face 2e of the air conditioning case 2 when the first temperature regulating door 11 is disposed in the upper side first position.

In the example shown, the drive mechanism 20 is configured so that the rack 40 meshes with a downstream side portion of the second external gear 25, as shown in Fig. 1. In accordance with this kind of configuration of the drive mechanism 20, the materials configuring the air conditioning case 2 and the rack 40 are selected so that the rate of expansion/contraction (thermal expansion coefficient) of the rack 40 due to temperature change is smaller than the rate of expansion/contraction (thermal expansion coefficient) of the air conditioning case 2 due to temperature change. For example, polypropylene, or a material wherein talc is mixed with polypropylene, is selected as the material configuring the air conditioning case 2, and nylon 6/6 or polybutyl terephthalate is selected as the material configuring the rack 40.

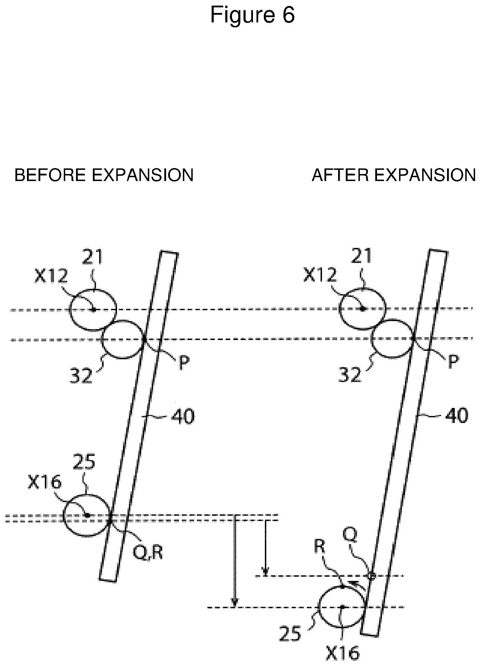

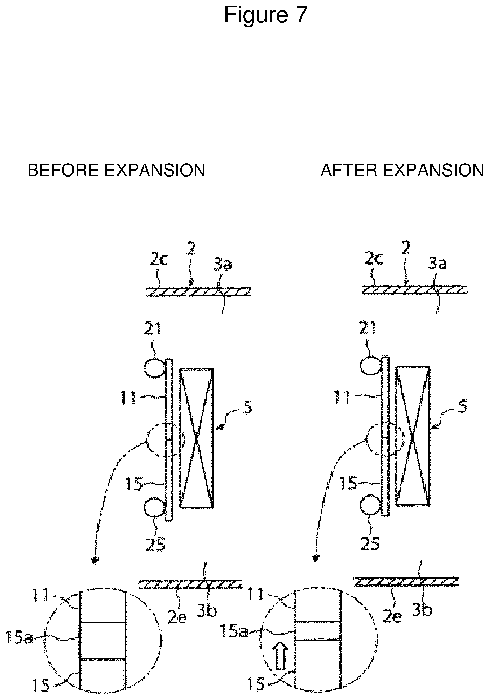

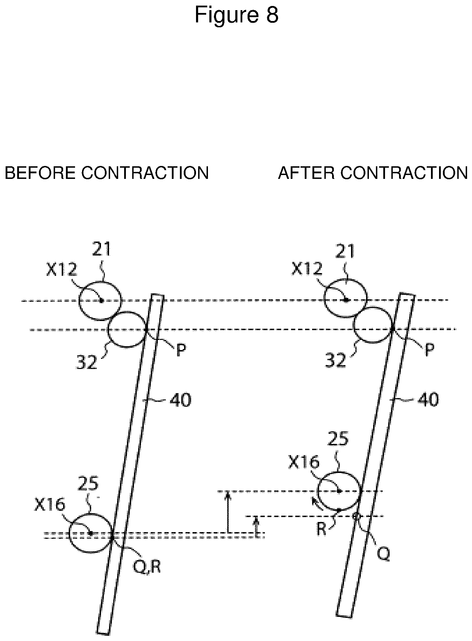

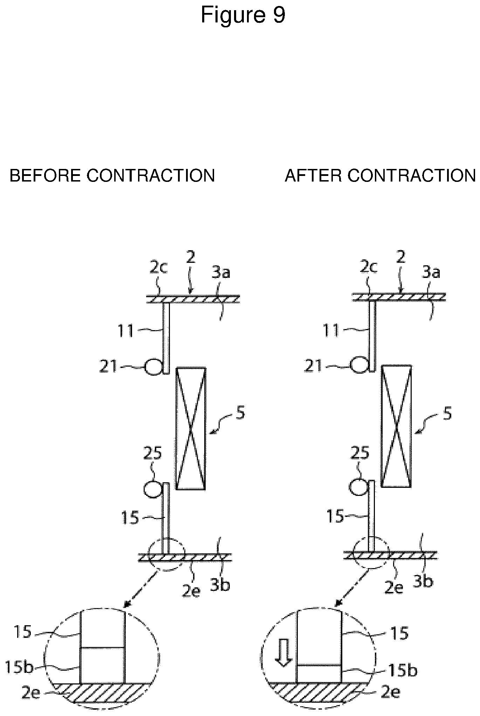

Hereafter, referring to Fig. 6 to Fig. 9, a description will be given of operations of the temperature regulating doors 11 and 15 when the air conditioning case 2 and the rack 40 of the air conditioning device 1 shown in Fig. 1 expand and contract. Fig. 6 is a drawing schematically showing the rack 40, the external gears 21 and 25, and the driving gear 32 of the rotary drive portion 30, before and after expansion of the rack 40 and the air conditioning case 2. In Fig. 6, the point P, the point Q, and the point R indicate respectively a position in which the rack 40 meshes with the driving gear 32, a position in which the rack 40 meshes with the second external gear 25, and a position in which the second external gear 25 meshes with the rack 40, before expansion of the rack 40 and the air conditioning case 2. Also, Fig. 7 is a drawing schematically showing the temperature regulating doors 11 and 15, the heating heat exchanger 5, and one portion of the air conditioning case 2, before and after expansion of the rack 40 and the air conditioning case 2. Furthermore, Fig. 8 is a drawing schematically showing the rack 40, the external gears 21 and 25, and the driving gear 32 of the rotary drive unit 30, before and after contraction of the rack 40 and the air conditioning case 2. In Fig. 8, the point P, the point Q, and the point R indicate respectively a position in which the rack 40 meshes with the driving gear 32, a position in which the rack 40 meshes with the second external gear 25, and a position in which the second external gear 25 meshes with the rack 40, before contraction of the rack 40 and the air conditioning case 2. Also, Fig. 9 is a drawing schematically showing the temperature regulating doors 11 and 15, the heating heat exchanger 5, and one portion of the air conditioning case 2, before and after contraction of the rack 40 and the air conditioning case 2.

Firstly, a case wherein the rack 40 and the air conditioning case 2 expand will be described. Herein, the rotary drive unit 30 does not operate, and rotation of the driving gear 32 is locked.

When the ambient temperature of the air conditioning device 1 rises, the air conditioning case 2 expands, and an interval between the external gears 21 and 25 supported by the air conditioning case 2 widens, as shown in Fig. 6. Also, the rack 40 expands, and lengthens in the longitudinal direction thereof. In the example shown in Fig. 6, the rate of expansion/contraction (thermal expansion coefficient) of the rack 40 due to temperature change is smaller than the rate of expansion/contraction (thermal expansion coefficient) of the air conditioning case 2 due to temperature change, because of which an amount by which an interval between the points P and Q of the rack 40 widens is smaller than an amount by which the interval between the external gears 21 and 25 widens. Because of this, the second external gear 25 that meshes with the rack 40 rotates. The rotation of the driving gear 32 is locked by the actuator 31, as heretofore described.

In the example shown, the rack 40 meshes with a downstream side portion of the second external gear 25. This means that when the rack 40 and the air conditioning case 2 expand, the second external gear 25 rotates in the counterclockwise direction in Fig. 6. An amount by which the second external gear 25 rotates is an amount in accordance with a difference between an amount by which the interval between the external gears 21 and 25 widens and an amount by which the interval between the points P and Q of the rack 40 widens.

When the second external gear 25 rotates in the counterclockwise direction, the second temperature regulating door 15 coupled to the second shaft 16 coupled to the second external gear 25 moves upward. The first temperature regulating door 11 does not move at this time.

The air conditioning device 1 configured in this way is such that when disposing the first temperature regulating door 11 in the upper side second position by causing the rotary drive unit 30 to operate, in order to cause the air conditioning device 1 to operate in the full cool mode, the second temperature regulating door 15 is disposed in a position in still greater proximity to the first temperature regulating door 11 than before expansion, and is in still closer contact with the first temperature regulating door 11 than before expansion. At this time, the second temperature regulating door 15 comes into close contact with the first temperature regulating door 11 while crushing the cushioning member 15a provided in the upper end portion of the second temperature regulating door 15, as shown in a partial enlarged view in Fig. 7. Consequently, a gap is prevented from being formed between the temperature regulating doors 11 and 15. As a result of this, the air conditioning device 1 can be caused to operate in the full cool mode after expansion of the rack 40 and the air conditioning case 2 too.

Next, a case wherein the rack 40 and the air conditioning case 2 contract will be described. Herein too, the rotary drive unit 30 does not operate, and rotation of the driving gear 32 is locked.

When the ambient temperature of the air conditioning device 1 decreases, the air conditioning case 2 contracts, and the interval between the external gears 21 and 25 supported by the air conditioning case 2 narrows, as shown in Fig. 8. Also, the rack 40 contracts, and shrinks in the longitudinal direction thereof. In the example shown in Fig. 8, the rate of expansion/contraction (thermal expansion coefficient) of the rack 40 due to temperature change is smaller than the rate of expansion/contraction (thermal expansion coefficient) of the air conditioning case 2 due to temperature change, because of which an amount by which the interval between the points P and Q of the rack 40 narrows is smaller than an amount by which the interval between the external gears 21 and 25 narrows . Because of this, the second external gear 25 that meshes with the rack 40 rotates. The rotation of the driving gear 32 is locked by the actuator 31, as heretofore described.

In the example shown, the rack 40 meshes with a downstream side portion of the second external gear 25. This means that when the rack 40 and the air conditioning case 2 contract, the second external gear 25 rotates in the clockwise direction in Fig. 8. An amount by which the second external gear 25 rotates is an amount in accordance with a difference between an amount by which the interval between the external gears 21 and 25 narrows and an amount by which the interval between the points P and Q of the rack 40 narrows.

When the second external gear 25 rotates in the clockwise direction, the second temperature regulating door 15 coupled to the second shaft 16 coupled to the second external gear 25 moves downward. The first temperature regulating door 11 does not move at this time.

The air conditioning device 1 configured in this way is such that when disposing the first temperature regulating door 11 in the upper side first position by causing the rotary drive unit 30 to operate, in order to cause the air conditioning device 1 to operate in the full hot mode, the second temperature regulating door 15 is disposed in a position in still greater proximity to the bottom face 2e of the air conditioning case 2 than before contraction, and is in still closer contact with the bottom face 2e than before contraction. At this time, the second temperature regulating door 15 comes into close contact with the bottom face 2e while crushing the cushioning member 15b provided in the lower end portion of the second temperature regulating door 15, as shown in a partial enlarged view in Fig. 9. Consequently, a gap is prevented from being formed between the second temperature regulating door 15 and the bottom face 2e. As a result of this, the air conditioning device 1 can be caused to operate in the full hot mode after contraction too.

As heretofore described, the air conditioning device 1 of the first embodiment is such that operation in the full cool mode can be realized even when the ambient temperature rises and the air conditioning case 2 and the rack 40 expand at mutually different rates of expansion/contraction (thermal expansion coefficients) . Also, operation in the full hot mode can be realized even when the ambient temperature decreases and the air conditioning case 2 and the rack 40 contract at mutually different rates of expansion/contraction (thermal expansion coefficients).

According to the first embodiment, as heretofore described, the vehicle-use air conditioning device 1 includes the air conditioning case 2 having the internal space 3 through which air flows, the cooling heat exchanger 4 disposed in the internal space 3, and the heating heat exchanger 5 disposed in the internal space 3 on the downstream side of the cooling heat exchanger 4 in the direction in which the air flows. Also, the vehicle-use air conditioning device 1 includes the first temperature regulating door 11, which is disposed so as to be slidable on the upstream side of the heating heat exchanger 5 in the direction in which the air flows, and regulates proportions of air that heads to the first cold air bypass 3a provided on one end side of the heating heat exchanger 5 and air that heads to the heating heat exchanger 5, and the second temperature regulating door 15, which is disposed so as to be slidable on the upstream side of the heating heat exchanger 5 in the direction in which the air flows, and regulates proportions of air that heads to the second cold air bypass 3b provided on the other end side opposing the one end side of the heating heat exchanger 5 and air that heads to the heating heat exchanger 5. Also, the vehicle-use air conditioning device 1 includes the first shaft 12, which is coupled to the side of the first temperature regulating door 11 facing the cooling heat exchanger 4 in the internal space 3, and drives the first temperature regulating door 11 by rotating, the first external gear 21, which is coupled to the first shaft 12 on the exterior of the air conditioning case 2, and rotates around the axis of rotation X12 of the first shaft 12, the second shaft 16, which is coupled to the side of the second temperature regulating door 15 facing the cooling heat exchanger 4 in the internal space 3, and drives the second temperature regulating door 15 by rotating, and the second external gear 25, which is coupled to the second shaft 16 on the exterior of the air conditioning case 2, and rotates around the axis of rotation X16 of the second shaft 16. Furthermore, the vehicle-use air conditioning device 1 includes the rotary drive unit 30, which outputs a rotary drive force that drives one gear 21 of the first external gear 21 and the second external gear 25 so as to rotate, and the rack 40, which is disposed on the exterior of the air conditioning case 2, and transmits the rotary drive force of the rotary drive unit 30 to the other gear 25 of the first external gear 21 and the second external gear 25. The rate of expansion/contraction of the rack 40 due to temperature change and the rate of expansion/contraction of the air conditioning case 2 due to temperature change are mutually different. Further, the rack 40 meshes with a downstream side portion or an upstream side portion of the other gear 25 in the direction in which the air flows so as to cause the shaft 16 coupled to the other gear 25 to rotate so that the temperature regulating door 15 driven via the other gear 25 moves in a direction away from the temperature regulating door 11 driven via the one gear 21 when the air conditioning case 2 and the rack 40 contract, or so as to cause the shaft 16 coupled to the other gear 25 to rotate so that the temperature regulating door 15 driven via the other gear 25 moves in a direction toward the temperature regulating door 11 driven via the one gear 21 when the air conditioning case 2 and the rack 40 expand.

This kind of air conditioning device 1 is such that when the air conditioning case 2 and the rack 40 contract, the temperature regulating door 15 driven via the other gear 25 moves in a direction away from the temperature regulating door 11 driven via the one gear 21. Also, when the air conditioning case 2 and the rack 40 expand, the temperature regulating door 15 driven via the other gear 25 moves in a direction toward the temperature regulating door 11 driven via the one gear 21. Because of this, the air conditioning device 1 can be caused to operate in the full hot mode even when there is a decrease in the ambient temperature such that the air conditioning case 2 and the rack 40 contract. Also, the air conditioning device 1 can be caused to operate in the full cool mode even when there is a rise in the ambient temperature such that the air conditioning case 2 and the rack 40 expand.

Specifically, in the first embodiment, the rate of expansion/contraction of the rack 40 due to temperature change is smaller than the rate of expansion/contraction of the air conditioning case 2 due to temperature change. Also, the rotary drive unit 30 includes the actuator 31 and the driving gear 32, which is driven so as to rotate by the actuator 31 and meshes with the one gear 21. Further, the rack 40 meshes with downstream side portions of the driving gear 32 and the other gear 25 in the direction in which the air flows.

More specifically still, in the first embodiment, the air conditioning case 2 is configured of polypropylene, or a material wherein talc is mixed with polypropylene. Also, the rack 40 is configured of nylon 6/6 or polybutyl terephthalate. Because of this, the rate of expansion/contraction of the rack 40 due to temperature change can be smaller than the rate of expansion/contraction of the air conditioning case 2 due to temperature change.

In the first embodiment, the one gear driven so as to rotate by the rotary drive unit 30 is the first external gear 21, and the other gear to which the rotary drive force of the rotary drive unit 30 is transmitted is the second external gear 25, but this is not limiting. The one gear may be the second external gear 25, and the other gear may be the first external gear 21.

### Modified Example of Rack

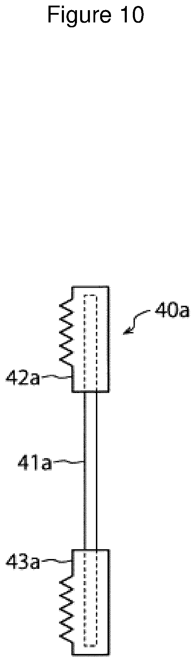

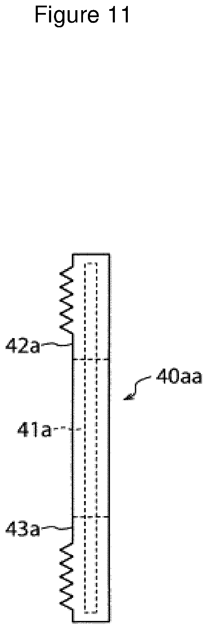

Next, referring to Fig. 10 and Fig. 11, a modified example of the rack 40 of the first embodiment shown in Fig. 1 will be described.

In the heretofore described embodiment, a description has been given with a case wherein the rack 40 is configured only of resin as an example. However, a rack may be configured using two or more materials.

For example, a rack may include a metal and a resin. In the example shown in Fig. 10, a rack 40a may have a metal portion 41a configured of a metal that extends in a longitudinal direction of the rack 40a, and toothed portions 42a and 43a made of resin that are fixed to either end of the metal portion 41a. Generally, the rate of expansion/contraction (thermal expansion coefficient) due to temperature change of a metal is far smaller than that of a resin in the temperature range within which the air conditioning device 1 is used. Because of this, the rate of expansion/contraction due to temperature change of the rack 40a in the temperature range within which the air conditioning device 1 is used can be effectively restricted. Consequently, restricting expansion and contraction due to temperature change of the rack 40a in the usage temperature range is easy compared with doing so for the air conditioning case 2.

In the example shown in Fig. 10, a region between the toothed portions 42a and 43a of the metal portion 41a is not covered with resin. However, this is not limiting. In the example shown in Fig. 11, a rack 40aa has the metal portion 41a and the toothed portions 42a and 43a, in the same way as the rack 40a shown in Fig. 10. Further, a region between the toothed portions 42a and 43a of the metal portion 41a of the rack 40aa is covered with resin. According to this kind of rack 40aa too, the rate of expansion/contraction due to temperature change of the rack 40a in the usage temperature range can be restricted further compared with the air conditioning case 2.

### Second Embodiment

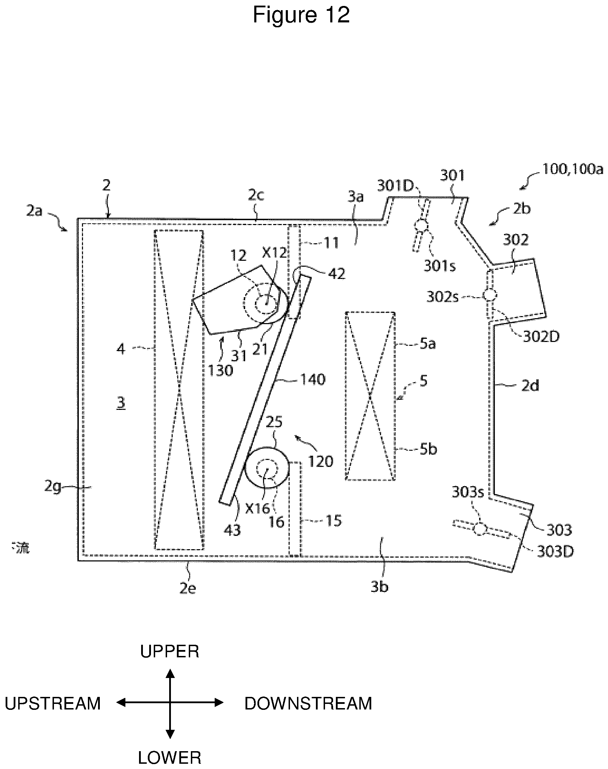

Next, referring to Fig. 12 to Fig. 16, a second embodiment will be described. Fig. 12 is a drawing showing an air conditioning unit 100a of an air conditioning device 100 according to the second embodiment.

The second embodiment shown in Fig. 12 to Fig. 16 differs in comparison with the air conditioning device 1 shown in Fig. 1 to Fig. 9 in that a rate of expansion/contraction (thermal expansion coefficient) due to temperature change of a rack 140 is greater than the rate of expansion/contraction (thermal expansion coefficient) due to temperature change of the air conditioning case 2. Also, the second embodiment differs in that a drive mechanism 120 is configured so that the rack 140 meshes with an upstream side portion of the second external gear 25. Other configurations are approximately the same as those of the air conditioning device 1 shown in Fig. 1 to Fig. 9. In the second embodiment shown in Fig. 12 to Fig. 16, the same reference sign is allotted to a portion the same as in the first embodiment shown in Fig. 1 to Fig. 9, and a detailed description is omitted.

The drive mechanism 120, which drives the temperature regulating doors 11 and 15 of the air conditioning unit 100a shown in Fig. 12, is such that the actuator 31 of a rotary drive unit 130 drives the first external gear 21 so as to rotate. Also, the toothed portion 42 on an upper side of the rack 140 meshes with a downstream side portion of the first external gear 21. Also, the toothed portion 43 on a lower side of the rack 140 meshes with an upstream side portion of the second external gear 25. The first external gear 21 and the second external gear 25 can be caused to rotate in mutually different directions of rotation by this kind of drive mechanism 120 too. That is, the drive mechanism 120 can cause the second temperature regulating door 15 to move in a direction from the lower side first position toward the lower side second position simultaneously with causing the first temperature regulating door 11 to move in a direction from the upper side first position toward the upper side second position. Also, the drive mechanism 120 can cause the second temperature regulating door 15 to move in a direction from the lower side second position toward the lower side first position simultaneously with causing the first temperature regulating door 11 to move in a direction from the upper side second position toward the upper side first position.

In accordance with the configuration of the drive mechanism 120 shown in Fig. 12, materials configuring the air conditioning case 2 and the rack 140 are selected so that the rate of expansion/contraction (thermal expansion coefficient) of the rack 140 due to temperature change is greater than the rate of expansion/contraction (thermal expansion coefficient) of the air conditioning case 2 due to temperature change. For example, polypropylene, or a material wherein talc is mixed with polypropylene, is selected as the material configuring the air conditioning case 2, and polyoxyethylene or polyacetal is selected as the material configuring the rack 140.

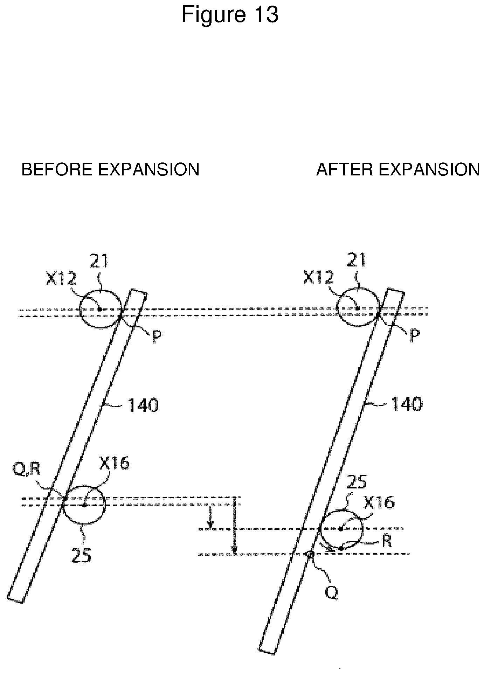

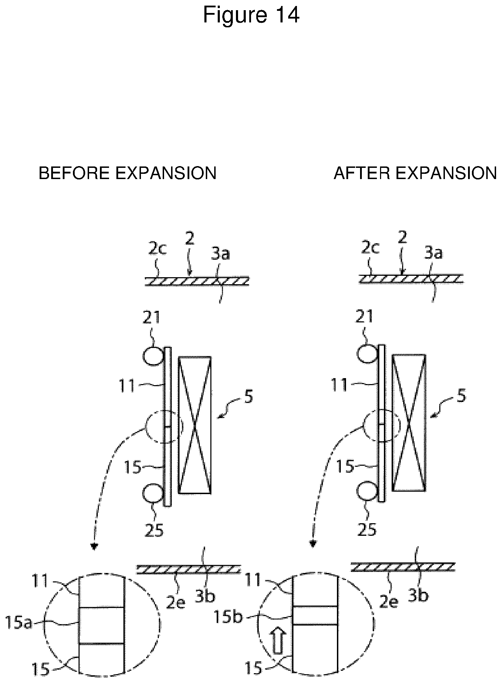

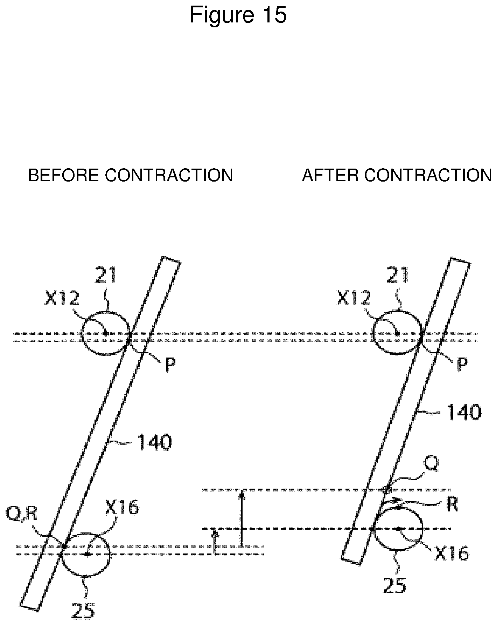

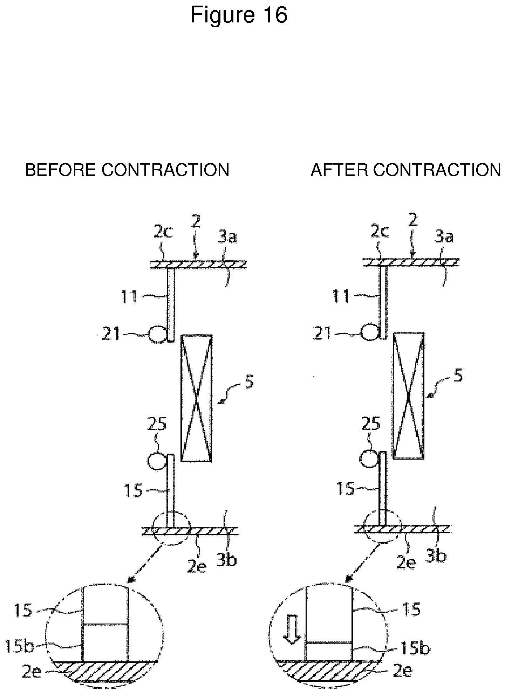

Hereafter, referring to Fig. 13 to Fig. 16, a description will be given of operations of the temperature regulating doors 11 and 15 when the air conditioning case 2 and the rack 140 of the air conditioning device 100 shown in Fig. 12 expand and contract. Fig. 13 is a drawing schematically showing the rack 140 and the external gears 21 and 25 before and after expansion of the rack 140 and the air conditioning case 2. In Fig. 13, the point P, the point Q, and the point R indicate respectively a position in which the rack 140 meshes with the first external gear 21, a position in which the rack 140 meshes with the second external gear 25, and a position in which the second external gear 25 meshes with the rack 140, before expansion of the rack 140 and the air conditioning case 2. Also, Fig. 14 is a drawing schematically showing the temperature regulating doors 11 and 15, the heating heat exchanger 5, and one portion of the air conditioning case 2, before and after expansion of the rack 140 and the air conditioning case 2. Furthermore, Fig. 15 is a drawing schematically showing the rack 140 and the external gears 21 and 25 before and after contraction of the rack 140 and the air conditioning case 2. In Fig. 15, the point P, the point Q, and the point R indicate respectively a position in which the rack 140 meshes with the first external gear 21, a position in which the rack 140 meshes with the second external gear 25, and a position in which the second external gear 25 meshes with the rack 140, before contraction of the rack 140 and the air conditioning case 2. Also, Fig. 16 is a drawing schematically showing the temperature regulating doors 11 and 15, the heating heat exchanger 5, and one portion of the air conditioning case 2, before and after contraction of the rack 140 and the air conditioning case 2.

Firstly, a case wherein the rack 140 and the air conditioning case 2 expand will be described. Herein, the rotary drive unit 30 does not operate, and rotation of the first external gear 21 is locked.

When the ambient temperature of the air conditioning device 100 rises, the air conditioning case 2 expands, and the interval between the external gears 21 and 25 supported by the air conditioning case 2 widens, as shown in Fig. 13. Also, the rack 140 expands, and lengthens in a longitudinal direction thereof. In the example shown in Fig. 13, the rate of expansion/contraction (thermal expansion coefficient) of the rack 140 due to temperature change is greater than the rate of expansion/contraction (thermal expansion coefficient) of the air conditioning case 2 due to temperature change, because of which an amount by which an interval between the points P and Q of the rack 140 widens is greater than an amount by which the interval between the external gears 21 and 25 widens. Because of this, the second external gear 25 that meshes with the rack 140 rotates. The rotation of the first external gear 21 is locked by the actuator 31, as heretofore described.

In the example shown, the rack 140 meshes with an upstream side portion of the second external gear 25. This means that when the rack 140 and the air conditioning case 2 expand, the second external gear 25 rotates in the counterclockwise direction in Fig. 13. An amount by which the second external gear 25 rotates is an amount in accordance with a difference between an amount by which the interval between the external gears 21 and 25 widens and an amount by which the interval between the points P and Q of the rack 140 widens.

When the second external gear 25 rotates in the counterclockwise direction, the second temperature regulating door 15 coupled to the second shaft 16 coupled to the second external gear 25 moves upward. The first temperature regulating door 11 does not move at this time.

The air conditioning device 100 configured in this way is such that when disposing the first temperature regulating door 11 in the upper side second position by causing the rotary drive unit 30 to operate, in order to cause the air conditioning device 100 to operate in the full cool mode, the second temperature regulating door 15 is disposed in a position in still greater proximity to the first temperature regulating door 11 than before expansion, and is in still closer contact with the first temperature regulating door 11 than before expansion. At this time, the second temperature regulating door 15 comes into close contact with the first temperature regulating door 11 while crushing the cushioning member 15a provided in the upper end portion of the second temperature regulating door 15, as shown in a partial enlarged view in Fig. 14. Consequently, a gap is prevented from being formed between the temperature regulating doors 11 and 15. As a result of this, the air conditioning device 100 can be caused to operate in the full cool mode after expansion too.

Next, a case wherein the rack 140 and the air conditioning case 2 contract will be described. Herein too, the rotary drive unit 30 does not operate, and rotation of the first external gear 21 is locked.

When the ambient temperature of the air conditioning device 100 decreases, the air conditioning case 2 contracts, and the interval between the external gears 21 and 25 supported by the air conditioning case 2 narrows, as shown in Fig. 15. Also, the rack 140 contracts, and shrinks in the longitudinal direction thereof. In the example shown in Fig. 15, the rate of expansion/contraction (thermal expansion coefficient) of the rack 140 due to temperature change is greater than the rate of expansion/contraction (thermal expansion coefficient) of the air conditioning case 2 due to temperature change, because of which an amount by which the interval between the points P and Q of the rack 140 narrows is greater than an amount by which the interval between the external gears 21 and 25 narrows. Because of this, the second external gear 25 that meshes with the rack 140 rotates. The rotation of the first external gear 21 is locked by the actuator 31, as heretofore described.

In the example shown, the rack 140 meshes with a downstream side portion of the second external gear 25. This means that when the rack 140 and the air conditioning case 2 contract, the second external gear 25 rotates in the clockwise direction in Fig. 15. An amount by which the second external gear 25 rotates is an amount in accordance with a difference between an amount by which the interval between the external gears 21 and 25 narrows and an amount by which the interval between the points P and Q of the rack 140 narrows.

When the second external gear 25 rotates in the clockwise direction, the second temperature regulating door 15 coupled to the second shaft 16 coupled to the second external gear 25 moves downward. The first temperature regulating door 11 does not move at this time.

The air conditioning device 100 configured in this way is such that when disposing the first temperature regulating door 11 in the upper side first position by causing the rotary drive unit 30 to operate, in order to cause the air conditioning device 100 to operate in the full hot mode, the second temperature regulating door 15 is disposed in a position in still greater proximity to the bottom face 2e of the air conditioning case 2 than before contraction, and is in still closer contact with the bottom face 2e than before contraction. At this time, the second temperature regulating door 15 comes into close contact with the bottom face 2e while crushing the cushioning member 15b provided in the lower end portion of the second temperature regulating door 15, as shown in a partial enlarged view in Fig. 16. Consequently, a gap is prevented from being formed between the second temperature regulating door 15 and the bottom face 2e. As a result of this, the air conditioning device 100 can be caused to operate in the full hot mode after contraction too.

In this way, the air conditioning device 100 of the second embodiment is also such that operation in the full cool mode can be realized even when the ambient temperature rises and the air conditioning case 2 and the rack 140 expand at mutually different rates of expansion/contraction (thermal expansion coefficients). Also, operation in the full hot mode can be realized even when the ambient temperature decreases and the air conditioning case 2 and the rack 140 contract at mutually different rates of expansion/contraction (thermal expansion coefficients).

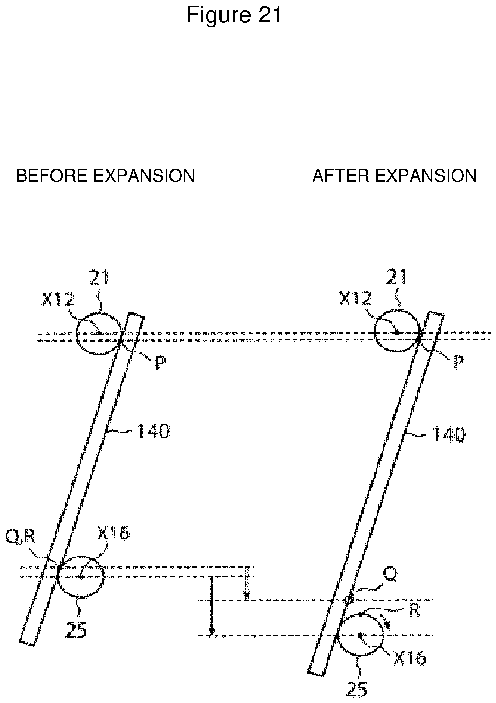

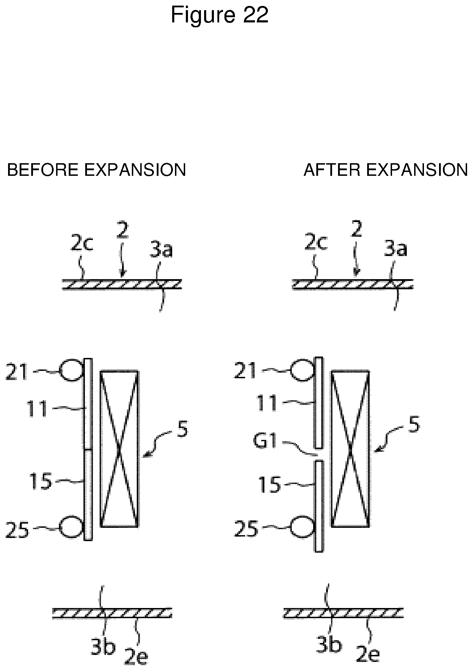

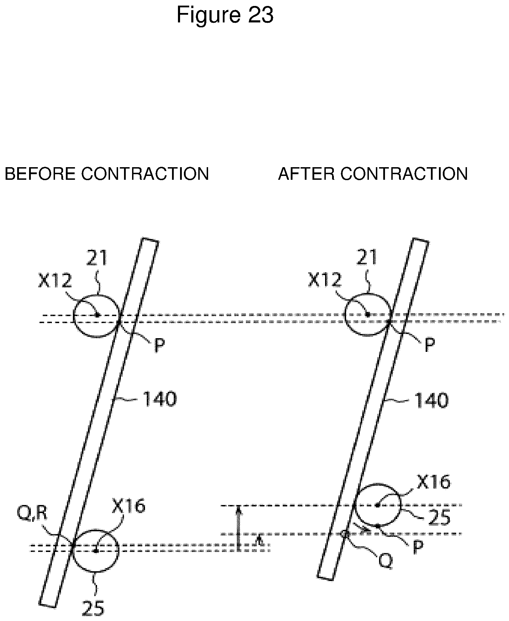

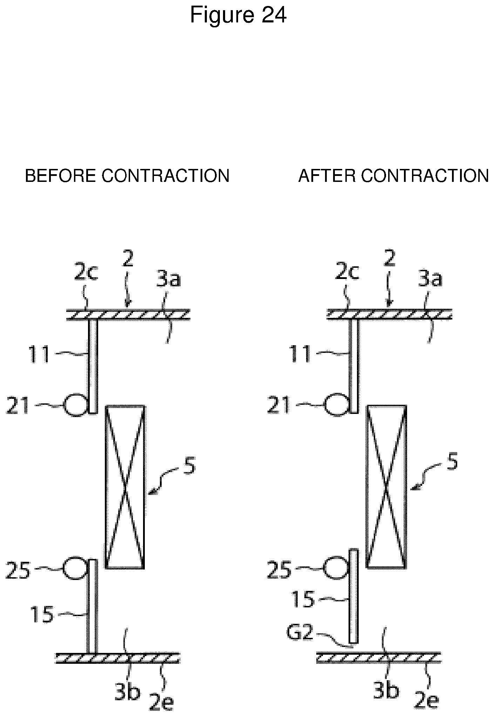

Referring to Fig. 21 to Fig. 24, an operation of the temperature regulating doors 11 and 15 of an air conditioning device, which is an air conditioning device wherein the drive mechanism 120 shown in Fig. 12 is employed, such that the rate of expansion/contraction (thermal expansion coefficient) of the rack 140 due to temperature change is smaller than the rate of expansion/contraction (thermal expansion coefficient) of the air conditioning case 2 due to temperature change will be described as a comparative example of the above-described air conditioning device 100. Fig. 21 is a drawing schematically showing the rack 140 and the external gears 21 and 25 before and after expansion of the rack 140 and the air conditioning case 2. In Fig. 21, the point P, the point Q, and the point R indicate respectively a position in which the rack 140 meshes with the first external gear 21, a position in which the rack 140 meshes with the second external gear 25, and a position in which the second external gear 25 meshes with the rack 140, before expansion of the rack 140 and the air conditioning case 2. Also, Fig. 22 is a drawing schematically showing the temperature regulating doors 11 and 15, the heating heat exchanger 5, and one portion of the air conditioning case 2, before and after expansion of the rack 140 and the air conditioning case 2. Furthermore, Fig. 23 is a drawing schematically showing the rack 140 and the external gears 21 and 25 before and after contraction of the rack 140 and the air conditioning case 2. In Fig. 23, the point P, the point Q, and the point R indicate respectively a position in which the rack 140 meshes with the first external gear 21, a position in which the rack 140 meshes with the second external gear 25, and a position in which the second external gear 25 meshes with the rack 140, before contraction of the rack 140 and the air conditioning case 2. Also, Fig. 24 is a drawing schematically showing the temperature regulating doors 11 and 15, the heating heat exchanger 5, and one portion of the air conditioning case 2, before and after contraction of the rack 140 and the air conditioning case 2.

Firstly, a case wherein the rack 140 and the air conditioning case 2 expand will be described. Herein, the rotary drive unit 30 does not operate, and rotation of the first external gear 21 is locked.

When the ambient temperature of the air conditioning device rises, the air conditioning case 2 expands, and the interval between the external gears 21 and 25 supported by the air conditioning case 2 widens, as shown in Fig. 21. Also, the rack 140 expands, and lengthens in the longitudinal direction thereof. In the comparative example shown in Fig. 21, the rate of expansion/contraction (thermal expansion coefficient) of the rack 140 due to temperature change is smaller than the rate of expansion/contraction (thermal expansion coefficient) of the air conditioning case 2 due to temperature change, because of which an amount by which the interval between the points P and Q of the rack 140 widens is smaller than an amount by which an interval between the external gears 21 and 25 widens. Because of this, the second external gear 25 that meshes with the rack 140 rotates. Rotation of the first external gear 21 is locked by the actuator 31, as heretofore described.

In the example shown, the rack 140 meshes with an upstream side portion of the second external gear 25. This means that when the rack 140 and the air conditioning case 2 expand, the second external gear 25 rotates in the clockwise direction in Fig. 21. An amount by which the second external gear 25 rotates is an amount in accordance with a difference between an amount by which the interval between the external gears 21 and 25 widens and an amount by which the interval between the points P and Q of the rack 140 widens.

When the second external gear 25 rotates in the clockwise direction, the second temperature regulating door 15 coupled to the second shaft 16 coupled to the second external gear 25 moves downward. The first temperature regulating door 11 does not move at this time.

The air conditioning device configured in this way is such that when disposing the first temperature regulating door 11 in the upper side second position by causing the rotary drive unit 30 to operate, in order to cause the air conditioning device to operate in the full cool mode, the second temperature regulating door 15 is disposed in a position farther separated from the first temperature regulating door 11 than before expansion. Consequently, the gap G1 is formed between the temperature regulating doors 11 and 15. Because of this, the air conditioning device cannot be caused to operate in the full cool mode after expansion.

Next, a case wherein the rack 140 and the air conditioning case 2 contract will be described. Herein too, the rotary drive unit 30 does not operate, and rotation of the first external gear 21 is locked.

When the ambient temperature of the air conditioning device decreases, the air conditioning case 2 contracts, and the interval between the external gears 21 and 25 supported by the air conditioning case 2 narrows, as shown in Fig. 23. Also, the rack 140 contracts, and shrinks in the longitudinal direction thereof. In the example shown in Fig. 23, the rate of expansion/contraction (thermal expansion coefficient) of the rack 140 due to temperature change is greater than the rate of expansion/contraction (thermal expansion coefficient) of the air conditioning case 2 due to temperature change, because of which an amount by which the interval between the points P and Q of the rack 140 narrows is greater than an amount by which the interval between the external gears 21 and 25 narrows . Because of this, the second external gear 25 that meshes with the rack 140 rotates. Rotation of the first external gear 21 is locked by the actuator 31, as heretofore described.

In the example shown, the rack 140 meshes with an upstream side portion of the second external gear 25. This means that when the rack 140 and the air conditioning case 2 contract, the second external gear 25 rotates in the counterclockwise direction in Fig. 23. An amount by which the second external gear 25 rotates is an amount in accordance with a difference between an amount by which the interval between the external gears 21 and 25 narrows and an amount by which the interval between the points P and Q of the rack 140 narrows.

When the second external gear 25 rotates in the counterclockwise direction, the second temperature regulating door 15 coupled to the second shaft 16 coupled to the second external gear 25 moves upward. The first temperature regulating door 11 does not move at this time.

The air conditioning device configured in this way is such that when disposing the first temperature regulating door 11 in the upper side first position by causing the rotary drive unit 30 to operate, in order to cause the air conditioning device to operate in the full hot mode, the second temperature regulating door 15 is disposed in a position farther separated from the bottom face 2e of the air conditioning case 2 than before contraction. Consequently, the gap G2 is formed between the second temperature regulating door 15 and the bottom face 2e. Because of this, the air conditioning device cannot be caused to operate in the full hot mode after contraction.

According to the second embodiment, as heretofore described, the rate of expansion/contraction of the rack 140 due to temperature change is greater than the rate of expansion/contraction of the air conditioning case 2 due to temperature change. Also, the rack 140 meshes with a downstream side portion of the one gear 21 and an upstream side portion of the other gear 25 in the direction in which the air flows.

In this case too, the temperature regulating door 15 driven via the other gear 25 moves in a direction away from the temperature regulating door 11 driven via the one gear 21 when the air conditioning case 2 and the rack 140 contract. Also, the temperature regulating door 15 driven via the other gear 25 moves in a direction toward the temperature regulating door 11 driven via the one gear 21 when the air conditioning case 2 and the rack 140 expand. Because of this, the air conditioning device 100 can be caused to operate in the full hot mode even when there is a decrease in the ambient temperature such that the air conditioning case 2 and the rack 40 contract. Also, the air conditioning device 100 can be caused to operate in the full cool mode even when there is a rise in the ambient temperature such that the air conditioning case 2 and the rack 40 expand.

In this case, for example, the air conditioning case 2 is configured of polypropylene, or a material wherein talc is mixed with polypropylene, and the rack 140 is configured of polyoxyethylene or polyacetal. Because of this, the rate of expansion/contraction of the rack 140 due to temperature change can be greater than the rate of expansion/contraction of the air conditioning case 2 due to temperature change.

A vehicle-use air conditioning device according to the invention can be manufactured industrially, and can be a subject of a commercial transaction, because of which the device has economic value, and can be utilized in industry.

### Description of Reference Numerals and Signs

1, 100: vehicle-use air conditioning device
2: air conditioning case
3: internal space
4: cooling heat exchanger
5: heating heat exchanger
11: first temperature regulating door
12: first shaft
15: second temperature regulating door
16: second shaft
20, 120: drive mechanism
21: first external gear
25: second external gear
30: rotary drive unit
31: actuator
40, 40a, 40aa, 140: rack

## Claims

1. A vehicle-use air conditioning device (1, 100), comprising:
an air conditioning case (2) having an internal space (3) through which air flows;
a cooling heat exchanger (4) disposed in the internal space (3);
a heating heat exchanger (5) disposed in the internal space (3) on a downstream side of the cooling heat exchanger (4) in a direction in which the air flows;
a first temperature regulating door (11), disposed so as to be slidable on an upstream side of the heating heat exchanger (5) in the direction in which the air flows, that regulates proportions of air that heads to a first cold air bypass (3a) provided on one end side of the heating heat exchanger (5) and air that heads to the heating heat exchanger (5) ;
a second temperature regulating door (15), disposed so as to be slidable on the upstream side of the heating heat exchanger (5) in the direction in which the air flows, that regulates proportions of air that heads to a second cold air bypass (3b) provided on another end side opposing the one end side of the heating heat exchanger (5) and air that heads to the heating heat exchanger (5);
a first shaft (12), coupled to a side of the first temperature regulating door (11) facing the cooling heat exchanger (4) in the internal space (3), that drives the first temperature regulating door (11) by rotating;
a first external gear (21), coupled to the first shaft (12) on an exterior of the air conditioning case (2), that rotates around an axis of rotation (X12) of the first shaft (12);
a second shaft (16), coupled to a side of the second temperature regulating door (15) facing the cooling heat exchanger (4) in the internal space (3), that drives the second temperature regulating door (15) by rotating;
a second external gear (25), coupled to the second shaft (16) on the exterior of the air conditioning case (2), that rotates around an axis of rotation (X16) of the second shaft (16) ;
a rotary drive unit (30) that outputs a rotary drive force that drives one gear (21, 25) of the first external gear (21) and the second external gear (25) so as to rotate; and
a rack (40, 40a, 40aa, 140), disposed on the exterior of the air conditioning case (2), that transmits the rotary drive force of the rotary drive unit (30) to an other gear (25, 21) of the first external gear (21) and the second external gear (25), **characterized in that**
rates of expansion/contraction of the rack (40, 40a, 40aa, 140) and the air conditioning case (2) due to temperature change are mutually different, and
the rack (40, 40a, 40aa, 140) meshes with a downstream side portion or an upstream side portion of the said other gear (25, 21) in the direction in which the air flows so as to cause the shaft (16, 12) coupled to the said other gear (25, 21) to rotate so that the temperature regulating door (15, 11) driven via the said other gear (25, 21) moves in a direction away from the temperature regulating door (11, 15) driven via the said one gear (21, 25) when the air conditioning case (2) and the rack (40, 40a, 40aa, 140) contract, or so as to cause the shaft (16, 12) coupled to the said other gear (25, 21) to rotate so that the temperature regulating door (15, 11) driven via the said other gear (25, 21) moves in a direction toward the temperature regulating door (11, 15) driven via the said one gear (21, 25) when the air conditioning case (2) and the rack (40, 40a, 40aa, 140) expand.

2. The vehicle-use air conditioning device (1) according to claim 1, wherein
the rate of expansion/contraction of the rack (40, 40a, 40aa) due to temperature change is smaller than the rate of expansion/contraction of the air conditioning case (2) due to temperature change,
the rotary drive unit (30) includes an actuator (31) and a driving gear (32), driven so as to rotate by the actuator (31), that meshes with the said one gear (21, 25), and
the rack (40, 40a, 40aa) meshes with downstream side portions of the driving gear (32) and the said other gear (25, 21) in the direction in which the air flows.

3. The vehicle-use air conditioning device (1) according to claim 2, wherein
the air conditioning case (2) is configured of polypropylene or a material wherein talc is mixed with polypropylene, and
the rack (40) is configured of nylon 6/6 or polybutyl terephthalate.

4. The vehicle-use air conditioning device (1) according to claim 2, wherein
the rack (40a, 40aa) has a metal portion (41a) that extends in a longitudinal direction of the rack (40a, 40aa), and toothed portions (42a, 43a), fixed to the metal portion (41a), in which teeth that mesh with the driving gear (32) and the said other gear (25, 21) are formed.

5. The vehicle-use air conditioning device (100) according to claim 1, wherein
the rate of expansion/contraction of the rack (140) due to temperature change is greater than the rate of expansion/contraction of the air conditioning case (2) due to temperature change, and
the rack (140) meshes with a downstream side portion of the said one gear (21, 25) and an upstream side portion of the said other gear (25, 21) in the direction in which the air flows.

6. The vehicle-use air conditioning device (100) according to claim 5, wherein
the air conditioning case (2) is configured of polypropylene or a material wherein talc is mixed with polypropylene, and
the rack (140) is configured of polyoxyethylene or polyacetal.

7. The vehicle-use air conditioning device (1, 100) according to any one of claims 1 to 6, wherein the said one gear is the first external gear (21), and the said other gear is the second external gear (25).

8. The vehicle-use air conditioning device (1, 100) according to any one of claims 1 to 6, wherein the said other gear is the first external gear (21), and the said one gear is the second external gear (25).

## Patentansprüche

1. Vorrichtung (1, 100) zur Klimatisierung eines Fahrzeugs, umfassend:
ein Klimaanlagengehäuse (2) mit einem von Luft durchströmten Innenraum (3);
einen Kühlungswärmetauscher (4), der in dem Innenraum (3) angeordnet ist;
einen Heizungswärmetauscher (5), der in dem Innenraum (3) auf einer stromabwärtigen Seite des Kühlungswärmetauschers (4) in einer Richtung angeordnet ist, in der die Luft strömt;
eine erste Temperaturregelklappe (11), die so angeordnet ist, dass sie auf einer stromaufwärtigen Seite des Heizungswärmetauschers (5) in der Richtung, in der die Luft strömt, verschiebbar ist, die die Anteile der Luft, die zu einem auf einer Endseite des Heizungswärmetauschers (5) vorgesehenen ersten Kaltluft-Bypass (3a) strömt, und der Luft, die zu dem Heizungswärmetauscher (5) strömt, regelt;
eine zweite Temperaturregelklappe (15), die so angeordnet ist, dass sie auf der stromaufwärtigen Seite des Heizungswärmetauschers (5) in der Richtung, in der die Luft strömt, verschiebbar ist, die die Anteile der Luft, die zu einem auf einer anderen Endseite gegenüber der einen Endseite des Heizungswärmetauschers (5) vorgesehenen zweiten Kaltluft-Bypass (3b) strömt, und der Luft, die zu dem Heizungswärmetauscher (5) strömt, regelt;
eine erste Welle (12), die mit einer Seite der ersten Temperaturregelklappe (11) gekoppelt ist, die dem Kühlungswärmetauscher (4) im Innenraum (3) zugewandt ist und die die erste Temperaturregelklappe (11) durch Drehen antreibt;
ein erstes äußeres Zahnrad (21), das mit der ersten Welle (12) an einer Außenseite des Klimaanlagengehäuses (2) gekoppelt ist und sich um eine Drehachse (X12) der ersten Welle (12) dreht;
eine zweite Welle (16), die mit einer Seite der zweiten Temperaturregelklappe (15) gekoppelt ist, die dem Kühlungswärmetauscher (4) im Innenraum (3) zugewandt ist und die die zweite Temperaturregelklappe (15) durch Drehen antreibt;
ein zweites äußeres Zahnrad (25), das mit der zweiten Welle (16) an der Außenseite des Klimaanlagengehäuses (2) gekoppelt ist und sich um eine Drehachse (X16) der zweiten Welle (16) dreht;
eine Drehantriebseinheit (30), die eine Drehantriebskraft ausgibt, die ein Zahnrad (21, 25) des ersten äußeren Zahnrads (21) und des zweiten äußeren Zahnrads (25) antreibt, so dass es sich dreht; und
eine an der Außenseite des Klimaanlagengehäuses (2) angeordnete Zahnstange (40, 40a, 40aa, 140), die die Drehantriebskraft der Drehantriebseinheit (30) auf ein anderes Zahnrad (25, 21) des ersten äußeren Zahnrads (21) und des zweiten äußeren Zahnrads (25) überträgt, **dadurch gekennzeichnet, dass** die Expansions-/Kontraktionsraten der Zahnstange (40, 40a, 40aa, 140) und des Klimaanlagengehäuses (2) aufgrund von Temperaturänderungen voneinander verschieden sind, und die Zahnstange (40, 40a, 40aa, 140) mit einem stromabwärtigen Abschnitt oder einem stromaufwärtigen Abschnitt des anderen Zahnrads (25, 21) in der Richtung in Eingriff steht, in der die Luft strömt, um zu bewirken, dass sich die mit dem anderen Zahnrad (25, 21) gekoppelte Welle (16, 12) dreht, sodass sich die über das andere Zahnrad (25, 21) angetriebene Temperaturregelklappe (15, 11) in einer Richtung von der über das eine Zahnrad (21, 25) angetriebenen Temperaturregelklappe (11, 15) weg bewegt, wenn sich das Klimaanlagengehäuse (2) und die Zahnstange (40, 40a, 40aa, 140) zusammenziehen, oder um zu bewirken, dass sich die mit dem anderen Zahnrad (25, 21) gekoppelte Welle (16, 12) dreht, sodass sich die über das andere Zahnrad (25, 21) angetriebene Temperaturregelklappe (15, 11) in eine Richtung zu der über das eine Zahnrad (21, 25) angetriebenen Temperaturregelklappe (11, 15) hin bewegt, wenn sich das Klimaanlagengehäuse (2) und die Zahnstange (40, 40a, 40aa, 140) ausdehnen.

2. Vorrichtung (1) zur Klimatisierung eines Fahrzeugs gemäß Anspruch 1, wobei
die Expansions-/Kontraktionsrate der Zahnstange (40, 40a, 40aa) aufgrund einer Temperaturänderung kleiner als die Expansions-/Kontraktionsrate des Klimaanlagengehäuses (2) aufgrund einer Temperaturänderung ist,
die Drehantriebseinheit (30) einen Aktuator (31) und ein Antriebszahnrad (32) enthält, das so angetrieben wird, dass es sich durch den mit dem einen Zahnrad (21, 25) in Eingriff stehenden Aktuator (31) dreht, und
die Zahnstange (40, 40a, 40aa) mit stromabwärtigen Abschnitten des Antriebszahnrads (32) und des anderen Zahnrads (25, 21) in der Richtung, in der die Luft strömt, in Eingriff steht.

3. Vorrichtung (1) zur Klimatisierung eines Fahrzeugs gemäß Anspruch 2, wobei
das Klimaanlagengehäuse (2) aus Polypropylen oder einem Material, in dem Talk mit Polypropylen vermischt ist, aufgebaut ist, und
die Zahnstange (40) aus Nylon 6/6 oder Polybutylterephthalat aufgebaut ist.

4. Vorrichtung (1) zur Klimatisierung eines Fahrzeugs gemäß Anspruch 2, wobei
die Zahnstange (40a, 40aa) einen sich in einer Längsrichtung der Zahnstange (40a, 40aa) erstreckenden Metallabschnitt (41a) und an dem Metallabschnitt (41a) befestigte gezahnte Abschnitte (42a, 43a), in denen mit dem Antriebszahnrad (32) und dem anderen Zahnrad (25, 21) in Eingriff stehende Zähne ausgebildet sind, aufweist.

5. Vorrichtung (100) zur Klimatisierung eines Fahrzeugs gemäß Anspruch 1, wobei
die Expansions-/Kontraktionsrate der Zahnstange (140) aufgrund einer Temperaturänderung größer als die Expansions-/Kontraktionsrate des Klimaanlagengehäuses (2) aufgrund einer Temperaturänderung ist, und
die Zahnstange (140) mit einem stromabwärtigen Abschnitt des einen Zahnrads (21, 25) und einem stromaufwärtigen Abschnitt des anderen Zahnrads (25, 21) in der Richtung, in der die Luft strömt, in Eingriff steht.

6. Vorrichtung (100) zur Klimatisierung eines Fahrzeugs gemäß Anspruch 5, wobei das Klimaanlagengehäuse (2) aus Polypropylen oder einem Material, in dem Talk mit Polypropylen vermischt ist, ausgebildet ist, und
die Zahnstange (140) aus Polyoxyethylen oder Polyacetal aufgebaut ist.

7. Vorrichtung (1, 100) zur Klimatisierung eines Fahrzeugs gemäß einem der Ansprüche 1 bis 6, wobei das eine Zahnrad das erste äußere Zahnrad (21) ist und das andere Zahnrad das zweite äußere Zahnrad (25) ist.

8. Vorrichtung (1, 100) zur Klimatisierung eines Fahrzeugs gemäß einem der Ansprüche 1 bis 6, wobei das andere Zahnrad das erste äußere Zahnrad (21) ist und das eine Zahnrad das zweite äußere Zahnrad (25) ist.

## Revendications

1. Dispositif climatiseur à utiliser dans un véhicule (1, 100), comprenant :
un boîtier de climatisation (2) ayant un espace interne (3) à travers lequel l'air circule ;
un échangeur de chaleur de refroidissement (4) disposé dans l'espace interne (3) ;
un échangeur de chaleur de chauffage (5) disposé dans l'espace interne (3) sur un côté aval de l'échangeur de chaleur de refroidissement (4) dans une direction dans laquelle l'air circule ;
une première porte de régulation de température (11), disposée de sorte à pouvoir coulisser sur un côté amont de l'échangeur de chaleur de chauffage (5) dans la direction dans laquelle l'air circule, qui régule les proportions d'air qui se dirige vers une première dérivation d'air froid (3a) fournie sur un côté d'extrémité de l'échangeur de chaleur de chauffage (5) et d'air qui se dirige vers l'échangeur de chaleur de chauffage (5) ;
une seconde porte de régulation de température (15), disposée de sorte à pouvoir coulisser sur le côté amont de l'échangeur de chaleur de chauffage (5) dans la direction dans laquelle l'air circule, qui régule les proportions d'air qui se dirige vers une seconde dérivation d'air froid (3b) fournie sur un autre côté d'extrémité opposé au côté d'extrémité de l'échangeur de chaleur de chauffage (5) et d'air qui se dirige vers l'échangeur de chaleur de chauffage (5) ;
un premier arbre (12), accouplé à un côté de la première porte de régulation de température (11) faisant face à l'échangeur de chaleur de refroidissement (4) dans l'espace interne (3), qui entraîne la première porte de régulation de température (11) par rotation ;
un premier engrenage externe (21), accouplé au premier arbre (12) sur un extérieur du boîtier de climatisation (2), qui tourne autour d'un axe de rotation (X12) du premier arbre (12) ;
un second arbre (16), accouplé à un côté de la première porte de régulation de température (15) faisant face à l'échangeur de chaleur de refroidissement (4) dans l'espace interne (3), qui entraîne la seconde porte de régulation de température (15) par rotation ;
un second engrenage externe (25), accouplé au second arbre (16) sur l'extérieur du boîtier de climatisation (2), qui tourne autour d'un axe de rotation (X16) du second arbre (16) ;
une unité d'entraînement en rotation (30) qui produit une force d'entraînement en rotation qui entraîne un engrenage (21, 25) du premier engrenage externe (21) et du second engrenage externe (25) de sorte à ce qu'ils tournent ; et
une crémaillère (40, 40a, 40aa, 140), disposée à l'extérieur du boîtier de climatisation (2), qui transmet la force d'entraînement en rotation de l'unité d'entraînement en rotation (30) à un autre engrenage (25, 21) du premier engrenage externe (21) et du second engrenage externe (25), **caractérisé en ce que** les taux de dilatation/contraction de la crémaillère (40, 40a, 40aa, 140) et du boîtier de climatisation (2) dus à la variation de température sont mutuellement différents, et
la crémaillère (40, 40a, 40aa, 140) s'engrène avec une partie latérale aval ou une partie latérale amont dudit autre engrenage (25, 21) dans la direction dans laquelle l'air s'écoule de sorte à amener l'arbre (16, 12) accouplé audit autre engrenage (25, 21) à tourner de sorte que la porte de régulation de température (15, 11) entraînée par l'intermédiaire dudit autre engrenage (25, 21) se déplace dans une direction opposée à la porte de régulation de température (11, 15) entraînée par l'intermédiaire dudit un engrenage (21, 25) lorsque le boîtier de climatisation (2) et la crémaillère (40, 40a, 40aa, 140) se contractent, ou de sorte à amener l'arbre (16, 12) accouplé audit autre engrenage (25, 21) à tourner de sorte que la porte de régulation de température (15, 11) entraînée par l'intermédiaire dudit autre engrenage (25, 21) se déplace dans une direction vers la porte de régulation de température (11, 15) entraînée par l'intermédiaire dudit un engrenage (21, 25) lorsque le boîtier de climatisation (2) et la crémaillère (40, 40a, 40aa, 140) se dilatent.

2. Dispositif climatiseur à utiliser dans un véhicule (1) selon la revendication 1,
le taux de dilatation/contraction de la crémaillère (40, 40a, 40aa) dû au changement de température étant inférieur au taux de dilatation/contraction du boîtier de climatisation (2) dû au changement de température,
l'unité d'entraînement en rotation (30) comprenant un actionneur (31) et un engrenage d'entraînement (32), entraîné de sorte à tourner par l'actionneur (31), qui s'engrène avec ledit un engrenage (21, 25), et
la crémaillère (40, 40a, 40aa) s'engrenant avec des parties latérales aval de l'engrenage d'entraînement (32) et dudit autre engrenage (25, 21) dans la direction dans laquelle l'air circule.

3. Dispositif climatiseur à utiliser dans un véhicule (1) selon la revendication 2,
le boîtier de climatisation (2) étant conçu en polypropylène ou en un matériau, du talc étant mélangé au polypropylène, et
la crémaillère (40) étant conçue en nylon 6/6 ou en téréphtalate de polybutyle.

4. Dispositif climatiseur à utiliser dans un véhicule (1) selon la revendication 2,
la crémaillère (40a, 40aa) ayant une partie métallique (41a) qui s'étend dans une direction longitudinale de la crémaillère (40a, 40aa), et des parties dentées (42a, 43a), fixées à la partie métallique (41a), dans lesquelles sont formées des dents qui s'engrènent avec l'engrenage d'entraînement (32) et ledit autre engrenage (25, 21).

5. Dispositif climatiseur à utiliser dans un véhicule (100) selon la revendication 1,
le taux de dilatation/contraction de la crémaillère (140) dû au changement de température étant supérieur au taux de dilatation/contraction du boîtier de climatisation (2) dû au changement de température, et
la crémaillère (140) s'engrenant avec une partie latérale aval dudit un engrenage (21, 25) et une partie latérale amont dudit autre engrenage (25, 21) dans la direction dans laquelle l'air circule.

6. Dispositif climatiseur à utiliser dans un véhicule (100) selon la revendication 5,
le boîtier de climatisation (2) étant conçu en polypropylène ou en un matériau, du talc étant mélangé au polypropylène, et
la crémaillère (140) étant conçue en polyoxyéthylène ou en polyacétal.

7. Dispositif climatiseur à utiliser dans un véhicule (1, 100) selon l'une quelconque des revendications 1 à 6, ledit un engrenage étant le premier engrenage externe (21), et ledit autre engrenage étant le second engrenage externe (25).

8. Dispositif climatiseur à utiliser dans un véhicule (1, 100) selon l'une quelconque des revendications 1 à 6, ledit autre engrenage étant le premier engrenage externe (21), et ledit un engrenage étant le second engrenage externe (25).
